(19) Europäisches Patentamt
European Patent Office
Office européen des brevets

(11) **EP 2 603 465 B1**

(12) **FASCICULE DE BREVET EUROPEEN**

(45) Date de publication et mention
de la délivrance du brevet:
**12.09.2018 Bulletin 2018/37**

(21) Numéro de dépôt: **11746657.3**

(22) Date de dépôt: **22.07.2011**

(51) Int Cl.:
**C04B 35/626** *(2006.01)*  **C04B 35/105** *(2006.01)*
**C04B 35/106** *(2006.01)*  **C04B 35/12** *(2006.01)*
**C04B 35/66** *(2006.01)*  **C03B 5/43** *(2006.01)*

(86) Numéro de dépôt international:
**PCT/IB2011/053286**

(87) Numéro de publication internationale:
**WO 2012/020344 (16.02.2012 Gazette 2012/07)**

(54) **PRODUIT REFRACTAIRE A BASE D'OXYDE DE CHROME**

FEUERFESTES PRODUKT AUF DER BASIS VON CHROMOXYD

REFRACTORY PRODUCT ON THE BASIS OF CHROMIC OXIDE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.08.2010 FR 1056540
10.08.2010 FR 1056541**

(43) Date de publication de la demande:
**19.06.2013 Bulletin 2013/25**

(73) Titulaire: **Saint-Gobain Centre De Recherches
Et D'etudes Europeen
92400 Courbevoie (FR)**

(72) Inventeurs:
• LINNOT, Cyril
  F-69007 Lyon (FR)
• MOITRIER, Lionel
  F-13370 Mallemort (FR)

• BOUSSANT ROUX, Yves, Marcel, Léon
  F-84140 Montfavet (FR)
• CITTI, Olivier
  Wellesley, MA 02482 (US)
• AVEDIKIAN, Richard
  F-84440 Robion (FR)

(74) Mandataire: **Nony
11 rue Saint-Georges
75009 Paris (FR)**

(56) Documents cités:
**FR-A1- 2 647 435    US-A- 4 158 569
US-A- 4 544 643**

• O. N. POPOV: "Refractory Materials for
Glass-Furnace tanks", STATE SCIENTIFIC
RESEARCH INSTITUT FOR GLASS (USSR), 12
janvier 1973 (1973-01-12), pages 15-17,
XP002630976, NY (US) DOI: UDC
666.1.031:22.666.76

EP 2 603 465 B1

## Description

### Domaine technique

L'invention se rapporte à un mélange particulaire comportant de l'oxyde de chrome, à un produit fritté fabriqué à partir d'un tel mélange particulaire et à un procédé de fabrication d'un tel produit réfractaire fritté. Ce produit réfractaire peut être en particulier utilisé dans un environnement dans lequel il est en contact avec du verre en fusion.

### Etat de la technique

Parmi les produits réfractaires, on distingue les produits fondus et coulés et les produits frittés. A la différence des produits frittés, les produits fondus et coulés comportent le plus souvent une phase vitreuse intergranulaire très abondante qui vient remplir le réseau des grains cristallisés. Les problèmes rencontrés dans leurs applications respectives par les produits frittés et par les produits fondus et coulés, et les solutions techniques adoptées pour les résoudre, sont donc généralement différents. Par ailleurs, du fait des différences importantes entre les procédés de fabrication, une composition mise au point pour fabriquer un produit fondu et coulé n'est pas *a priori* utilisable telle quelle pour fabriquer un produit fritté, et réciproquement.

Les produits frittés sont obtenus par mélange de matières premières appropriées puis mise en forme à cru de ce mélange et cuisson de la pièce crue résultante à une température et pendant un temps suffisants pour obtenir le frittage de cette pièce crue. Les produits frittés, selon leur composition chimique, sont destinés à des industries très variées.

Des produits réfractaires comportant de l'oxyde de chrome sont classiquement utilisés dans des applications où ils sont soumis à une agression chimique extrême, par exemple dans des fours de verrerie, en particulier comme blocs de cuve de four, ou dans des fours dans lesquels ils sont au contact d'un laitier.

L'utilisation de tels produits réfractaires au contact avec un laitier ou avec un verre en fusion est par exemple connue de US 6,352,951 (fours d'incinération contenant des blocs à base d'alumine et de chrome), de US 4,823,359 (fours de verrerie présentant des revêtements constitués d'alumine et de chrome), ou de US 4,158,569 (produit réfractaire à base d'alumine et d'oxyde de chrome résistant à la corrosion par un verre en fusion). Ce dernier document divulgue en particulier un exemple 2 qui reproduit un matériau S-6 présenté par M. JAUPAIN, en octobre 1964, au « Symposium on Refractory materials for glass-melting furnaces » au laboratoire de recherche de Pilkington Brothers, Ltd.

La corrosion par un laitier est différente de la corrosion par un verre en fusion et un produit convenant pour être mis en contact avec un laitier ne convient donc pas forcément pour une application dans laquelle il serait mis en contact avec du verre en fusion.

Il existe cependant un besoin permanent pour augmenter la durée de vie de ces produits.

Le but de l'invention est de satisfaire ce besoin.

### Résumé de l'invention

L'invention propose un dispositif choisi parmi un four de verrerie et un canal de distribution du verre, également appelé « canal de feeder », comportant un bloc et/ou un revêtement en un produit fritté obtenu par frittage d'un mélange particulaire constitué d'une fraction matricielle et d'un granulat constitués respectivement des particules présentant une taille inférieure ou égale à 50 $\mu$m, dites « particules matricielles » et des particules présentant une taille supérieure à 50 $\mu$m, dites « grains », la fraction matricielle représentant plus de 10% et moins de 45% de la masse du mélange particulaire,

ledit mélange particulaire présentant une teneur en oxyde de chrome, notée « $Cr_T$ », supérieure ou égale à 10% et inférieure ou égale à 82%, de préférence inférieure ou égale à 80%, en pourcentage massique sur la base des oxydes du mélange réfractaire,

la fraction matricielle étant telle que

$$0,39.(Cr_T)+24 < Cr_M < 0,39.(Cr_T)+52 \qquad (I),$$

- $Cr_M$ désignant la teneur massique en oxyde de chrome de la fraction matricielle en pourcentage en masse sur la base des oxydes de la fraction matricielle, et le granulat étant tel que $x_{II} \geq 97\%$, $x_{III} \geq 70\%$, et $x_{IV} \leq x_{III} - 70\%$
- $Cr_G$ désignant la teneur massique en oxyde de chrome d'un grain, en pourcentage en masse sur la base des oxydes de ce grain,
- $x_{II}$ désignant la quantité, en pourcentage massique sur la base du granulat, de grains respectant la condition suivante (II) :

- si $10\% \leq Cr_T \leq 30\%$, alors $Cr_G \leq 0,018.(Cr_T)^2 - 0,390.(Cr_T)+58,8$ ;

- si $30\% < Cr_T \leq 60\%$, alors $Cr_G \leq 1,22.(Cr_T) + 26,7$ ;     **(II)**

- si $60\% < Cr_T \leq 82\%$, en particulier $60\% < Cr_T \leq 80\%$, alors $Cr_G \leq 100$,

- $x_{III}$ désignant la quantité, en pourcentage massique sur la base du granulat, de grains respectant la condition suivante **(III)** :

- si $10\% \leq Cr_T \leq 30\%$, alors

$$0,018.(Cr_T)^2-0,390.(Cr_T)+9,10 \leq Cr_G \leq 0,018.(Cr_T)^2-0,390.(Cr_T)+25,10 ;$$

- si $30\% < Cr_T \leq 60\%$, alors $1,17.(Cr_T)-21,5 \leq Cr_G \leq 1,17.(Cr_T)-5,5$ ;     **(III)**

- si $60\% < Cr_T \leq 82\%$, en particulier $60\% < Cr_T \leq 80\%$, alors $1,17.(Cr_T)-21,5 \leq Cr_G \leq 1,67.(Cr_T)-35,5$,

- $x_{IV}$ désignant la quantité, en pourcentage massique sur la base du granulat, de grains respectant la condition suivante **(IV)** :

- Si $10\% \leq Cr_T \leq 30\%$, alors $0,018.(Cr_T)^2-0,390.(Cr_T)+9,10 > Cr_G$ ;

- Si $30\% < Cr_T \leq 60\%$, alors $1,17.(Cr_T)-21,5 > Cr_G$ ;     **(IV)**

- Si $60\% < Cr_T \leq 82\%$, en particulier $60\% < Cr_T \leq 80\%$, alors $1,17.(Cr_T)-21,5 > Cr_G$.

La réponse traditionnellement proposée pour augmenter la durée de vie des produits disposés en contact avec le verre en fusion consiste en améliorer la résistance à la corrosion. Les inventeurs ont cependant, suivant une voie nouvelle, cherché à rendre plus uniforme l'usure des produits. Ils ont en effet observé que les « trous » à la surface en contact avec le verre en fusion, correspondant aux zones dans lesquelles l'usure est maximale, limitent la durée de vie des produits, quelle que soit leur composition.

Ils ont constaté que les conditions imposées à un produit fabriqué à partir d'un tel mélange particulaire conduisent avantageusement à un profil de corrosion particulièrement uniforme.

Un tel mélange particulaire peut encore présenter une ou plusieurs des caractéristiques optionnelles et préférées suivantes :

- $0,39.(Cr_T)+29 < Cr_M < 0,39.(Cr_T)+47$     **(V)** ;

- $0,39.(Cr_T)+32 < Cr_M < 0,39.(Cr_T)+44,5$     **(VI)** ;

- $x_{II}$ est supérieur à 98%, de préférence supérieur à 99%, de préférence sensiblement égal à 100% ;
- $x_{III}$ est supérieur à 85% et $x_{IV}$ est inférieur à 1%, de préférence sensiblement égal à 0% ;
- Au moins 70% en masse des grains présentent, en pourcentages en masse sur la base des oxydes, une teneur en oxyde de chrome respectant la condition suivante **(VII)** :

  - Si $10\% \leq Cr_T \leq 30\%$, alors $0,018.(Cr_T)^2-0,390.(Cr_T)+13,10 \leq Cr_G \leq 0,018.(Cr_T)^2-0,390.(Cr_T)+21,10$ ;
  - Si $30\% < Cr_T \leq 60\%$, alors $1,17.(Cr_T)-17,5 \leq Cr_G \leq 1,17.(Cr_T)-9,5$ ;
  - Si $60\% < Cr_T \leq 82\%$, en particulier $60\% < Cr_T \leq 80\%$, alors $1,67.(Cr_T)-51,5 \leq Cr_G \leq 1,67.(Cr_T)-39,5$ ;

- Au moins 70% en masse des grains présentent, en pourcentage en masse sur la base des oxydes, une teneur en oxyde de chrome respectant la condition suivante **(VIII)** :

  - Si $10\% \leq Cr_T \leq 30\%$, alors $0,018.(Cr_T)^2-0,390.(Cr_T)+13,10 \leq Cr_G \leq 0,018.(Cr_T)^2-0,390.(Cr_T)+21,10$ ;
  - Si $30\% < Cr_T \leq 60\%$, alors $1,17.(Cr_T)-17,5 \leq Cr_G \leq 1,17.(Cr_T)-9,5$ ;

- Si 60% < Crr ≤ 82%, en particulier 60% < $Cr_T$ ≤ 80%, alors 1,67.($Cr_T$)-47,5 ≤ $Cr_G$ ≤ 1,67.($Cr_T$)-39,5 ;

- Dans un mode de réalisation particulier, la fraction matricielle présente une teneur en oxyde de chrome « $Cr_M$ » respectant la condition **(VI)** et au moins 70% en masse des grains présentent une teneur en oxyde de chrome « $Cr_G$ » respectant la condition **(VIII)** ;
- Dans un second mode de réalisation particulier, la fraction matricielle présente une teneur en oxyde de chrome « $Cr_M$ » respectant la condition **(VI)** et au moins 99% en masse des grains présentent une teneur en oxyde de chrome « $Cr_G$ » respectant la condition **(VIII)** ;
- Au moins 90%, de préférence au moins 95%, de préférence au moins 99%, de préférence sensiblement 100% en masse des grains présentent une teneur en oxyde de chrome « $Cr_G$ » respectant la condition **(III)** et/ou la condition **(VII)** ;
- Les grains et/ou les particules matricielles contenant de l'oxyde de chrome sont de préférence des particules frittées ;
- Les particules du granulat et/ou de la fraction matricielle sont des particules frittées.

On décrit également un procédé de fabrication d'un produit réfractaire fritté, comportant les étapes successives suivantes :

A) préparation d'une charge de départ par mélange d'un mélange particulaire tel que décrit précédemment et d'eau ;
B) mise en forme de ladite charge de départ de manière à former une préforme;
C) frittage de ladite préforme.

Un produit fritté d'un dispositif selon l'invention peut être obtenu par frittage d'un mélange particulaire tel que décrit précédemment, en particulier suivant les étapes A) à C) ci-dessous.

De préférence, ce produit présente une densité supérieure à 3,1 g/m$^3$, voire supérieure à 3,3 g/m$^3$ et/ou inférieure à 4,5 g/cm$^3$, voire inférieure à 4,3 g/cm$^3$

**Définitions**

La « fraction matricielle » est constituée des particules de taille inférieure ou égale à 50 μm, dites « particules matricielles ». Ces particules sont destinées à constituer la matrice du produit réfractaire. La fraction complémentaire, constituée des particules présentant une taille supérieure à 50 μm ou « grains » est appelée « granulat ».

Par « taille d'une particule », on entend la dimension d'une particule donnée classiquement par une caractérisation de distribution granulométrique réalisée avec un granulomètre laser. Le granulomètre laser utilisé pour les exemples est un Partica LA-950 de la société HORIBA.

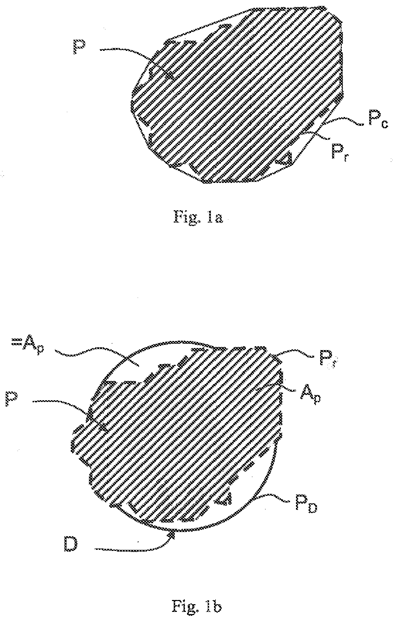

On appelle « circularité » d'une particule observée, le rapport $P_D/P_r$, Pr désignant le périmètre de la particule telle qu'observée, et $P_D$ désignant le périmètre du disque ayant la même surface que celle de la particule telle qu'observée. La circularité dépend de la direction d'observation. Comme représenté sur la figure 1b, pour évaluer la circularité « Ci » d'une particule P, on détermine le périmètre $P_D$ du disque D présentant une aire égale à l'aire $A_p$ de la particule P sur une photographie de cette particule. On détermine par ailleurs le périmètre $P_r$ de cette particule.

$$Ci = \frac{2 * \sqrt{\pi A_p}}{\mathrm{Pr}}.$$

La circularité est égale au rapport de $P_D/P_r$. Ainsi          Plus la particule est de forme allongée, plus la circularité est faible. Le manuel d'utilisation du SYSMEX FPIA 3000 décrit également cette procédure (voir « detailed spécification sheets » sur www.malvem.co.uk).

Les percentiles ou « centiles » 10 ($Ci_{10}$) et 50 ($Ci_{50}$) d'un ensemble de particules sont les circularités de particules correspondant aux pourcentages, en nombre, de 10% et 50% respectivement, sur la courbe de distribution des circularités cumulée des particules de cet ensemble, les circularités de particules étant classées par ordre croissant. Par exemple, 10% en masse des particules de cet ensemble ont une circularité inférieure à $Ci_{10}$. Les percentiles peuvent être évalués à l'aide d'un appareil du type Morphologi® G3 commercialisé par la société Malvern. $Ci_{50}$ est encore appelé « circularité médiane ».

Par extension, on utilise ces percentiles pour caractériser la distribution des circularités des particules d'un matériau fritté obtenu à partir de cette poudre.

Pour déterminer les percentiles $Ci_{10}$ et $Ci_{50}$ l'ensemble de particules est versé sur une plaque plane et observé perpendiculairement à cette plaque. Le nombre de particules comptabilisées est supérieur à 250, ce qui permet d'obtenir des percentiles sensiblement identiques, quelle que soit la façon selon laquelle les particules ont été versées sur la plaque. Une méthode de détermination est décrite plus en détail dans les exemples ci-dessous.

On appelle « convexité » d'une particule observée, le rapport $P_c / P_r$, $P_c$ désignant le périmètre convexe de la particule telle qu'observée et $P_r$ désignant le périmètre de ladite particule telle qu'observée, comme représenté sur la figure la. La convexité d'une particule dépend de la direction d'observation.

Les percentiles ou « centiles » 10 ($Co_{10}$) et 50 ($Co_{50}$) d'un ensemble de particules sont les convexités de particules correspondant aux pourcentages, en nombre, de 10% et 50%, respectivement, sur la courbe de distribution des convexités cumulée des particules de cet ensemble, les convexités de particules étant classées par ordre croissant. Par exemple, 10% en masse des particules de cet ensemble ont une convexité inférieure à $Co_{10}$. Les percentiles peuvent être évalués à l'aide d'un appareil du type Morphologi® G3 commercialisé par la société Malvern. $Co_{50}$ est encore appelé « convexité médiane ».

Par extension, on utilise ces percentiles pour caractériser la distribution des convexités des particules d'un matériau fritté obtenu à partir de cette poudre.

Pour déterminer les percentiles $Co_{10}$ et $Co_{50}$ l'ensemble de particules est versé sur une plaque plane et observé perpendiculairement à cette plaque. Le nombre de particules est supérieur à 250, ce qui permet d'obtenir des percentiles sensiblement identiques, quelle que soit la façon selon laquelle les particules ont été versées sur la plaque. Une méthode de détermination est décrite plus en détail dans les exemples ci-dessous.

Un « granule » est une particule présentant une circularité supérieure à 0,85.

On appelle « particule agglomérée », ou « agglomérat », une particule formée par un ensemble d'autres particules. Des particules agglomérées peuvent être notamment obtenues par frittage ou au moyen d'un liant.

Sauf indication contraire, tous les pourcentages sont des pourcentages massiques.

Les analyses chimiques ou les compositions chimiques des particules font référence à la composition de chacune desdites particules. Les analyses chimiques ou les compositions chimiques d'un « mélange particulaire » ou d'une « poudre » font référence à la composition moyenne, sur l'ensemble des particules concernées. Sauf indication contraire, ces compositions sont sur la base des oxydes.

Bien entendu, $Cr_G$ est toujours inférieur ou égal à 100%, même quand une des relations ci-dessus conduit à une limite supérieure qui dépasse 100%.

**Brève description des figures**

D'autres caractéristiques et avantages de l'invention apparaîtront encore à la lecture de la description détaillée et à l'examen du dessin dans lequel

- les figures 1a et 1b illustrent la méthode mise en oeuvre pour mesurer la convexité et la circularité, respectivement ;
- la figure 2 représente une photo d'une coupe d'un produit réfractaire d'un dispositif selon l'invention.

**Description détaillée**

Mélange particulaire

La fabrication du mélange particulaire peut résulter d'un mélange de poudres de matières premières présentant des compositions et des distributions granulométriques adaptées.

De préférence, le mélange particulaire présente une teneur en $Cr_2O_3$ + $Al_2O_3$ supérieure à 60%, de préférence supérieure à 65%, de préférence supérieure à 70%, de préférence supérieure à 80%, voire supérieure à 90%, voire supérieure à 92%, voire supérieure à 94%, en pourcentage massique sur la base des oxydes.

Dans un mode de réalisation, le mélange particulaire comporte une teneur en oxyde de chrome supérieure à 15%, supérieure à 20%, supérieure à 25%, supérieure à 30%, supérieure à 35%, supérieure à 40%, et/ou inférieure à 75%, inférieure à 70%, ou inférieure à 65%, inférieure à 50%. Dans un mode de réalisation, la teneur en oxyde de chrome est supérieure à 50%, voire supérieure à 55%.

Dans un mode de réalisation, le mélange particulaire comporte une teneur en $Al_2O_3$ supérieure à 3%, supérieure à 5%, supérieure à 10%, supérieure à 15%, supérieure à 20%, supérieure à 25% et/ou inférieure à 85%, inférieure à 80%, inférieure à 75%, inférieure à 70%, inférieure à 65%, inférieure à 60%, inférieure à 55%, voire inférieure à 35%. Dans un mode de réalisation, le mélange particulaire comporte une teneur en $Al_2O_3$ supérieure à 35%, supérieure à 40%, voire supérieure à 45%..

La teneur en silice du mélange particulaire peut être supérieure à 0,1%, supérieure à 0,5%, supérieure à 0,7%, supérieure à 1%, et/ou inférieure à 8%, inférieure à 5%, inférieure à 4%, inférieure à 3%, inférieure à 2%, voire inférieure à 1,5%.

La teneur en zircone du mélange particulaire peut être inférieure à 10%, inférieure à 5%, inférieure à 1%, inférieure à 0,5%, ou inférieure à 0,1%.

La teneur en oxyde de titane du mélange particulaire peut être supérieure à 0,3%, supérieure à 0,5%, supérieure à 1%, et/ou inférieure à 4%, inférieure à 3%, inférieure à 2%, inférieure à 1,5%, ou inférieure à 1,3%. Dans un mode de réalisation, la teneur en oxyde de titane du mélange particulaire est inférieure à 0,2%.

De préférence, la teneur totale en $Cr_2O_3$, $Al_2O_3$, $ZrO_2$, $SiO_2$ et $TiO_2$, dans le mélange particulaire, est supérieure à 90%, supérieure à 92%, supérieure à 94%, supérieure à 96%, supérieure à 98%. La distribution granulométrique n'est pas limitative. Elle peut en particulier être adaptée à la densité apparente du produit réfractaire fritté que l'on souhaite obtenir.

Dans un mode de réalisation, le rapport $Cr_M/Cr_G$ est supérieur à 1,05, supérieur à 1,1, supérieur à 1,15, supérieur à 1,2, supérieur à 1,3, supérieur à 1,4, supérieur à 1,5, supérieur à 1,6, et/ou inférieur à 7, inférieur à 6,5, inférieur à 6,0, inférieur à 5,5, inférieur à 5, ou inférieur à 4,5 ou inférieur à 4,0, inférieur à 3,5, inférieur à 3,0, inférieur à 2,5, inférieur à 2, inférieur à 1,7. Dans un mode de réalisation, le rapport $Cr_M/Cr_G$ est inférieur à 0,95, inférieur à 0,9, inférieur à 0,85, inférieur à 0,8, inférieur à 0,75, inférieur à 0,7, inférieur à 0,65, inférieur à 0,6, inférieur à 0,55.

Fraction matricielle

Le mélange particulaire comporte, de préférence, plus de 15%, plus de 20%, voire plus de 25%, et/ou moins de 40%, voire moins de 35%, voire moins de 30% de particules matricielles, en pourcentage massique sur la base du mélange particulaire.

De préférence, la fraction matricielle et de préférence au moins 80% en masse des particules matricielles présentent une composition chimique telle que, en pourcentages massiques sur la base des oxydes et pour un total de 100% :

$Cr_2O_3$ + $Al_2O_3$ + $ZrO_2$ + $MgO$ + $Fe_2O_3$ + $SiO_2$ + $TiO_2$ + $CaO \geq 90\%$, de préférence $Cr_2O_3$ + $Al_2O_3$ + $ZrO_2$ + $MgO$ + $Fe_2O_3$ + $SiO_2$ + $TiO_2$ + $CaO \geq 95\%$, et
- $Cr_2O_3$ + $Al_2O_3$ + $MgO \geq 50\%$, et
- $Cr_2O_3 \geq 7\ \%$, et
- $15\% \geq SiO_2 \geq 0,1\%$, et
- autres oxydes : $\leq 10\%$, de préférence $\leq 5\%$.

De préférence, au moins 90% en masse des particules matricielles présentent une taille inférieure à 40 $\mu$m, de préférence inférieure à 30 $\mu$m, de préférence inférieure à 20 $\mu$m, voire inférieure à 10 $\mu$m.

De préférence, la composition de la fraction matricielle est telle que

- la teneur totale $Cr_2O_3$ + $Al_2O_3$ + $MgO$ est supérieure à 65%, de préférence supérieure à 70%, de préférence supérieure à 80%, voire supérieure à 90%, en pourcentage massique sur la base des oxydes ; et/ou
- la teneur en $SiO_2$ est inférieure à 12%, de préférence inférieure à 10%, de préférence inférieure à 8%, de préférence inférieure à 6%, de préférence inférieure à 5%, voire inférieure à 4%, voire inférieure à 3% ; et/ou
- la teneur en $TiO_2$ est inférieure à 7%, voire inférieure à 4%, voire inférieure à 3%, voire inférieure à 2% ; et/ou
- la teneur en « autres oxydes » est inférieure à 5%, de préférence inférieure à 4%, de préférence inférieure à 3%, de préférence inférieure à 2%, de préférence inférieure à 1%.

Dans certains modes de réalisation, la composition de la fraction matricielle est telle que $Cr_2O_3$ + $Al_2O_3$ > 80%, $Cr_2O_3$ + $Al_2O_3$ > 90%, ou même $Cr_2O_3$ + $Al_2O_3$ > 95%.

Dans certains modes de réalisation, la composition de la fraction matricielle est telle que la teneur en $TiO_2$ est inférieure à 0,2%.

Dans certains modes de réalisation, la composition de la fraction matricielle est telle que la teneur en $Al_2O_3$ est supérieure à 5%, supérieure à 7,5%, supérieure à 10%, supérieure à 15% et/ou est inférieure à 72%, inférieure à 65%, inférieure à 60%, inférieure à 50%.

De préférence, les particules matricielles contiennent une solution solide $Cr_2O_3$-$Al_2O_3$ et/ou un spinelle à base de $Cr_2O_3$-$MgO$, par exemple $MgCr_2O4$, et/ou un spinelle à base de $Cr_2O_3$-oxyde de fer, par exemple $FeCr_2O_4$, et/ou un spinelle à base d'$Al_2O_3$-$MgO$, par exemple $MgAl_2O_4$, et/ou un spinelle à base d'$Al_2O_3$-oxyde de fer, par exemple $FeAl_2O_4$, et/ou au moins une de leurs solutions solides.

De préférence toujours, la somme des teneurs en oxydes dans les particules de la fraction matricielle représente plus de 90%, plus de 95%, voire sensiblement 100% de la masse desdites particules matricielles.

La fraction matricielle est de préférence constituée de particules d'oxyde de chrome d'une part et, d'autre part, de particules d'alumine et/ou de particules de zircone et/ou de particules de magnésie et/ou de particules d'oxyde de fer et/ou de particules d'oxyde de titane et/ou de particules de silice et/ou de particules de d'oxyde de calcium. De préférence, la fraction matricielle est constituée de particules composées d'oxyde de chrome d'une part et, d'autre part, d'alumine et/ou de zircone et/ou de magnésie et/ou d'oxyde de fer et/ou d'oxyde de titane et/ou de silice et/ou d'oxyde de calcium, ou de mélanges de telles particules. Par exemple, la fraction matricielle peut être un mélange de particules d'oxyde de chrome et de particules d'alumine, mais également être constituée des particules d'oxyde de chrome et d'alumine, sous la forme par exemple d'une solution solide. De préférence, les particules matricielles sont composées d'oxyde de chrome d'une part et, d'autre part, d'alumine et/ou d'oxyde de calcium et/ou de zircone et/ou d'oxyde de titane.

La quantité de particules matricielles de zircone est de préférence inférieure à 10%, de préférence inférieure à 8%, de préférence inférieure à 5%, de préférence inférieure à 3%, en pourcentage massique sur la base des oxydes du mélange particulaire.

La taille médiane des particules matricielles peut être inférieure à 25 microns, inférieure à 15 microns, inférieure à 10 microns, voire inférieure à 7 microns.

Dans un mode de réalisation, le mélange particulaire ne contient pas de particules de zircone, en particulier de particules matricielles de zircone.

Granulat

Le mélange particulaire comporte, de préférence, moins de 85%, voire moins de 80%, voire moins de 75% de grains, en pourcentage massique sur la base du mélange particulaire.

Le granulat est de préférence constitué de particules d'oxyde de chrome d'une part et, d'autre part, de particules d'alumine et/ou de particules de zircone et/ou de particules de magnésie et/ou de particules d'oxyde de fer et/ou de particules d'oxyde de titane et/ou de particules de silice. De préférence, le granulat est constitué de particules composées d'oxyde de chrome d'une part et, d'autre part, d'alumine et/ou de zircone et/ou de magnésie et/ou d'oxyde de fer et/ou d'oxyde de titane et/ou de silice, ou de mélanges de telles particules. Par exemple, le granulat peut être un mélange de particules d'oxyde de chrome et de particules d'alumine, mais également être un mélange de particules d'oxyde de chrome et d'alumine, sous la forme par exemple d'une solution solide. De préférence, les grains sont composés d'oxyde de chrome d'une part et, d'autre part, d'alumine et/ou de zircone et/ou d'oxyde de titane.

De préférence également, le mélange particulaire ne contient pas de particules de zircone de taille comprise entre 50 $\mu$m et 500 $\mu$m, de préférence ne contient pas de particules de zircone dans le granulat. Avantageusement, la résistance au lâcher de pierres du produit réfractaire obtenu à partir du mélange réfractaire au contact du verre en fusion en est améliorée.

L'écart type de la distribution de la teneur en oxyde de chrome des grains est de préférence inférieur à 8, de préférence inférieur à 4, de préférence inférieur à 1,5, de préférence inférieur à 1, de préférence encore inférieur à 0,75. La différence entre les teneurs en oxyde de chrome la plus faible et la plus forte est de préférence inférieure à 9%, de préférence inférieure à 6%, de préférence inférieure à 4,5%. Tous les grains présentent alors des teneurs en oxyde de chrome similaires.

De préférence encore, quel que soit le constituant considéré pourvu que sa teneur soit supérieure à 1% en pourcentage massique sur la base des oxydes, l'écart type de la distribution de sa teneur entre les différents grains est inférieur à 8, de préférence inférieur à 4, de préférence inférieur à 1,5, de préférence inférieur à 1, de préférence encore inférieur à 0,75. Tous les grains présentent alors des compositions similaires.

De préférence, le granulat présente une densité apparente supérieure à 85% de la densité théorique, de préférence supérieure à 88%, de préférence supérieure à 90%, de préférence supérieure à 91%, de préférence supérieure à 92% de la densité théorique, voire supérieure à 93%, voire supérieure à 94%, voire supérieure à 95%, voire supérieure à 96% de la densité théorique.

De préférence, le granulat présente une porosité ouverte inférieure à 10%, de préférence inférieure à 6%, de préférence inférieure à 5%, de préférence inférieure à 3%, de préférence inférieure à 2%, de préférence inférieure à 1%, voire inférieure à 0,7%, voire même inférieure à 0,6%.

Le granulat peut contenir des granules, c'est-à-dire des particules sensiblement sphériques. De préférence, le granulat présente une circularité médiane supérieure à 0,87. De préférence, les granules sont des particules agglomérées, en particulier des particules frittées.

Dans un mode de réalisation particulier, au moins 80%, de préférence au moins 90%, de préférence au moins 95%, de préférence au moins 99%, voire sensiblement 100% en nombre des grains sont des granules.

De préférence, le granulat et de préférence au moins 80% en masse des grains, de préférence des granules du granulat, présentent une composition chimique telle que, en pourcentages massiques sur la base des oxydes et pour un total de 100% :

- $Cr_2O_3 + Al_2O_3 + ZrO_2 + MgO + Fe_2O_3 + SiO_2 + TiO_2 \geq 90\%$, de préférence $Cr_2O_3 + Al_2O_3 + ZrO_2 + MgO + Fe_2O_3 + SiO_2 + TiO_2 \geq 95\%$, et
- $Cr_2O_3 + Al_2O_3 + MgO \geq 60\%$, et
- $Cr_2O_3 \geq 9\%$, et
- $20\% \geq SiO_2 \geq 0,5\%$, et
- autres oxydes : $\leq 10\%$, de préférence $\leq 5\%$.

De préférence, au moins 90% en masse des grains, de préférence des granules, présentent une taille supérieure à 100 $\mu$m, de préférence supérieure à 200 $\mu$m, de préférence supérieure à 300 $\mu$m, de préférence supérieure à 400 $\mu$m.

Les inventeurs ont découvert que, de manière remarquable, un produit réfractaire à base d'oxyde de chrome mettant en oeuvre de tels granules présente une bonne résistance aux chocs thermiques et une résistance à la corrosion élevée.

De préférence, la composition du granulat est telle que

-   la teneur totale $Cr_2O_3$ + $Al_2O_3$ + MgO est supérieure à 65%, de préférence supérieure à 70%, de préférence supérieure à 80%, voire supérieure à 90%, voire supérieure à 92%, voire supérieure à 94%, en pourcentage massique sur la base des oxydes ; et/ou
-   la teneur en $SiO_2$ est inférieure à 16%, de préférence inférieure 13%, de préférence inférieure à 10%, de préférence inférieure à 8%, de préférence inférieure à 6%, de préférence inférieure à 5%, voire inférieure à 4%, voire inférieure à 3% (avantageusement, la densification en est améliorée, sans pour autant que la résistance à la corrosion en soit réduite) ; et/ou
-   la teneur en $TiO_2$ est supérieure à 0,5%, voire supérieure à 0,7%, et/ou inférieure à 4%, de préférence inférieure à 3%, inférieure à 2,2%, voire inférieure à 2% ; et/ou
-   la teneur en « autres oxydes » est inférieure à 5%, de préférence inférieure à 4%, de préférence inférieure à 3%, de préférence inférieure à 2%, de préférence inférieure à 1%.

Dans certains modes de réalisation, la composition du granulat est telle que $Cr_2O_3$ + $Al_2O_3$ > 80%, $Cr_2O_3$ + $Al_2O_3$ > 90%, ou même $Cr_2O_3$ + $Al_2O_3$ > 95%.

Dans un premier mode de réalisation particulier, la composition du granulat, de préférence des granules du granulat, est telle que, en pourcentage massique sur la base des oxydes :

-   $Cr_2O_3$ : 9% à 50% ;
-   $Al_2O_3$ : 45% à 88% ;
-   $SiO_2$ < 20%, de préférence $S_1O_2$ < 16%, de préférence $S_1O_2$ < 13%, de préférence $SiO_2$ < 10%, de préférence $SiO_2$ < 8%, de préférence $SiO_2$ < 6%, de préférence $SiO_2$ < 5%, de préférence $SiO_2$ < 4%, de préférence $SiO_2$ < 3% ;
-   $Fe_2O_3$ < 1% ;
-   MgO < 0,5% ;
-   0,5% < $TiO_2$ < 4%, voire $TiO_2$ < 2% ;
-   $ZrO_2$ < 5% ;
-   autres oxydes < 2%, de préférence : autres oxydes < 1%.

La teneur en $Cr_2O_3$ peut être comprise entre 10% et 20%, entre 20% et 30%, entre 30% et 40%, ou entre 40% et 50%, et/ou la teneur en $Al_2O_3$ peut être comprise entre 45% et 55%, entre 55% et 65%, entre 65% et 75%, ou entre 75% et 88%.

Dans un deuxième mode de réalisation particulier, la composition du granulat, de préférence des granules du granulat, est telle que, en pourcentage massique sur la base des oxydes :

-   $Cr_2O_3$ : 50% à 95% ;
-   $Al_2O_3$ : 2% à 45%;
-   $SiO_2$ < 20%, de préférence $SiO_2$ < 16%, de préférence $SiO_2$ < 13%, de préférence $SiO_2$ < 10%, de préférence $SiO_2$ < 8%, de préférence $S_1O_2$ < 6%, de préférence $SiO_2$ < 5%, de préférence $SiO_2$ < 4%, de préférence $SiO_2$ < 3% ;
-   $Fe_2O_3$ < 1% ;
-   MgO < 0,5% ;
-   0,5% < $TiO_2$ < 4%, voire $TiO_2$ < 2% ;
-   $ZrO_2$ < 5% ;
-   autres oxydes < 2%, de préférence : autres oxydes < 1%.

La teneur en $Cr_2O_3$ peut être comprise entre 50% et 60%, entre 60% et 70%, entre 70% et 80%,ou entre 80% et 95%, et/ou la teneur en $Al_2O_3$ peut être comprise entre 2% et 12%, entre 12% et 22%, entre 22% et 32%, ou entre 32% et 45%.

Dans un troisième mode de réalisation particulier, la composition du granulat, de préférence des granules du granulat, est telle que, en pourcentage massique sur la base des oxydes :

-   $Cr_2O_3$ : 95% à 99% ;
-   $Al_2O_3$ : 0 à 4% ;

- $SiO_2$ < 4%, de préférence $SiO_2$ < 3%, de préférence $S_1O_2$ < 2%, de préférence $SiO_2$ < 1% ;
- $Fe_2O_3$ < 4%;
- MgO < 0,5% ;
- 0,5% < $TiO_2$ < 5%, voire $TiO_2$ < 4%, voire $TiO_2$ < 2% ;
- $ZrO_2$ < 4% ;
- autres oxydes < 2%, de préférence : autres oxydes < 1%.

Dans un quatrième mode de réalisation particulier, la composition du granulat, de préférence des granules du granulat, est telle que, en pourcentage massique sur la base des oxydes :

- $Cr_2O_3$ : 15% à 50% ;
- $Al_2O_3$ : 10% à 80% ;
- 1% < $Fe_2O_3$ < 30%, voire 3% < $Fe_2O_3$ ;
- 0,5% < MgO < 20%, de préférence MgO < 10% ;
- $S_1O_2$ < 20%, de préférence $SiO_2$ < 16%, de préférence $SiO_2$ < 13%, de préférence $S_1O_2$ < 10%, de préférence $SiO_2$ < 8%, de préférence $SiO_2$ < 6%, de préférence $SiO_2$ < 5%, de préférence $SiO_2$ < 4%, de préférence $SiO_2$ < 3% ;
- 0,5% < $TiO_2$ < 4%, voire $TiO_2$ < 2% ;
- $ZrO_2$ < 5% ;
- autres oxydes < 2%, de préférence : autres oxydes < 1%.

La teneur en $Cr_2O_3$ peut être comprise entre 15% et 25%, entre 25% et 35%, ou entre 35% et 50%, et/ou la teneur en $Al_2O_3$ peut être comprise entre 10% et 20%, entre 20% et 30%, entre 30% et 40%, entre 40% et 50%, entre 50% et 60%, entre 60% et 70%, ou entre 70% et 80%, et/ou la teneur en $Fe_2O_3$ peut être comprise entre 3% et 10%, entre 10% et 20%, ou entre 20% et 30%.

De préférence, les grains, de préférence les granules du granulat contiennent une solution solide $Cr_2O_3$-$Al_2O_3$ et/ou un spinelle à base de $Cr_2O_3$-MgO, par exemple $MgCr_2O_4$, et/ou un spinelle à base de $Cr_2O_3$-oxyde de fer, par exemple $FeCr_2O_4$, et/ou un spinelle à base d'$Al_2O_3$-MgO, par exemple $MgAl_2O_4$, et/ou un spinelle à base d'$Al_2O_3$-oxyde de fer, par exemple $FeAl_2O_4$, et/ou au moins une de leurs solutions solides.

De préférence toujours, la somme des teneurs en oxydes dans les grains, de préférence les granules du granulat, représente plus de 90%, plus de 95%, voire sensiblement 100% de la masse desdits grains ou granules.

Dans un mode de réalisation, le granulat et la fraction matricielle présentent des compositions sensiblement identiques. Dans un mode de réalisation, ces compositions sont différentes.

Dans un mode de réalisation, le granulat est constitué, pour plus de 90% de sa masse, de particules frittées. De préférence, les granules du granulat sont des particules frittées.

De préférence, le granulat présente

- une densité apparente supérieure à 3,0 g/cm$^3$; de préférence supérieure à 3,3 g/cm$^3$, voire supérieure à 3,5 g/cm$^3$, voire supérieure à 3,6 g/cm$^3$ ; et/ou
- une densité apparente supérieure à 85% de la densité théorique, de préférence supérieure à 88%, de préférence supérieure à 90%, de préférence supérieure à 91%, de préférence supérieure à 92% de la densité théorique, voire supérieure à 93%, voire supérieure à 94%, voire supérieure à 95%, voire supérieure à 96% de la densité théorique (avantageusement, la coulabilité du mélange particulaire en est améliorée) ; et/ou
- une porosité ouverte inférieure à 10%, de préférence inférieure à 6%, de préférence inférieure à 5%, de préférence inférieure à 3%, de préférence inférieure à 2%, de préférence inférieure à 1%, voire inférieure à 0,7%, voire inférieure à 0,6%. La résistance à la corrosion du produit réfractaire obtenu à partir du mélange réfractaire, notamment par contact avec du verre en fusion, en est améliorée.

De préférence toujours, plus de 80%, de préférence plus de 90%, de préférence plus de 95%, de préférence plus de 99% en masse des granules, voire des grains, du granulat, de préférence sensiblement tous les granules du granulat, voire sensiblement tous les grains du granulat présentent une taille supérieure à 200 $\mu$m, de préférence supérieure à 300 $\mu$m, de préférence supérieure à 400 $\mu$m, voire supérieure à 0,5 mm et/ou inférieure à 10 mm, de préférence inférieure à 5 mm.

De préférence toujours, le mélange particulaire contient au moins 10% de grains de taille supérieure à 2 mm, en pourcentage massique.

De préférence, le granulat présente :

- une circularité médiane supérieure à 0,88, de préférence supérieure à 0,90, de préférence supérieure à 0,91, de préférence supérieure à 0,92, de préférence supérieure à 0,93 ; (avantageusement, la résistance aux chocs thermiques en est améliorée) ; et/ou

- une circularité $Ci_{10}$ supérieure à 0,72, de préférence supérieure à 0,74, de préférence supérieure à 0,76, de préférence supérieure à 0,78, de préférence supérieure à 0,80, de préférence supérieure à 0,82 ; et/ou
- une convexité médiane $Co_{50}$ supérieure à 0,90, de préférence supérieure à 0,92, de préférence supérieure à 0,94, de préférence supérieure à 0,95, de préférence supérieure à 0,96 ; et/ou
- une convexité $Co_{10}$ supérieure à 0,80, de préférence supérieure à 0,82, de préférence supérieure à 0,85, de préférence supérieure à 0,88, de préférence supérieure à 0,90 ; et/ou
- une circularité médiane supérieure à 0,90, de préférence supérieure à 0,92, et une porosité ouverte inférieure à 2%, de préférence inférieure à 1%.

De préférence, les caractéristiques relatives à la composition chimique d'un granulat tel que défini ci-dessus, et en particulier les caractéristiques optionnelles ci-dessus, sont applicables à plus de 80%, plus de 90%, voire plus de 95% ou plus de 99% en masse, ou sensiblement 100% des grains de ce granulat.

Additif

Le mélange particulaire peut encore contenir au moins 0,1% en masse d'un additif de mise en forme.
L'additif peut en particulier être choisi dans le groupe constitué par :

- les argiles ;
- les plastifiants, comme le polyéthylène glycol (ou « PEG ») ou l'alcool polyvinylique (ou « APV »);
- les ciments, de préférence à haute teneur en alumine ;
- les alumines hydratables, comme la boehmite ;
- les liants dont liants temporaires organiques tels que des résines, les lignosulfonates, la carboxyméthylcellulose ou la dextrine ;
- les défloculants, tels que des polyphosphates de métaux alcalins, des polyacrylates de métaux alcalins, des polycarboxylates ; et
- les mélanges de ces produits.

De préférence, l'additif de mise en forme est choisi dans le groupe constitué par les ciments, les défloculants, les argiles, les lignosulfonates, l'APV et leurs mélanges.
De préférence, la teneur en additif de mise en forme est inférieure à 6%, en pourcentage massique sur la base du mélange particulaire.

*Fabrication d'un mélange particulaire tel que décrit précédemment*

Des particules frittées, et en particulier un granulat de particules frittées, peuvent être fabriquées suivant un procédé conventionnel comportant les étapes successives suivantes :

a) préparation d'une charge de départ par mélange de matières premières et d'eau ;
b) mise en forme de ladite charge de départ de manière à former un ensemble de particules ;
c) frittage des particules obtenues à l'étape b).

Un exemple de procédé est décrit en détail dans les exemples.
A l'étape a), le mélange des matières premières est adapté de façon à obtenir des particules présentant la composition chimique désirée. Tout moyen de mélange peut être utilisé, comme par exemple un mélangeur ou un malaxeur intensif.
A l'étape b), de préférence, la mise en forme ne comporte pas d'opération d'atomisation. Un tel procédé conduit en effet à une faible densité. Une opération d'atomisation conduit également à des particules présentant une taille faible, ce qui rend difficile la fabrication de grains sphériques. L'étape b) peut comprendre une opération de granulation. Une telle opération ne peut cependant garantir l'obtention d'une circularité médiane supérieure à 0,87 et d'une densité supérieure à 85% de la densité théorique. Pour obtenir un tel résultat, un malaxeur de type intensif est de préférence utilisé, de préférence avec une vitesse linéaire en bout de tourbillon supérieure à 6 m/sec, et avec une alimentation séquentielle dudit malaxeur en charge de départ.
A l'étape c), les particules sont frittées, par exemple dans un four de cuisson. Tous les fours de cuisson peuvent être utilisés, comme par exemple les fours intermittents, mais également les fours rotatifs. Les paramètres du frittage sont déterminés en fonction de la composition des particules.
La température de frittage peut être comprise entre 1400°C et 1700°C. Le frittage peut s'effectuer sous air, mais également en condition neutre (sous azote par exemple), voire en condition réductrice (sous excès de monoxyde de carbone par exemple). De préférence, le frittage s'effectue sous air.

Le temps de palier peut être compris entre 1 heure et 10 heures, de préférence entre 2 heures et 5 heures.

La porosité ouverte peut être ajustée en modifiant la distribution granulométrique des matières premières particulaires mises en oeuvre, ou en agissant sur la température et/ou la durée de palier lors du frittage.

*Procédé de fabrication d'un produit réfractaire*

Le mélange réfractaire peut être avantageusement utilisé pour fabriquer des produits présentant un granulat lié par une matrice liante.

A cet effet, un procédé comportant les étapes A) à C) décrites ci-dessus peut être mis en oeuvre. Ce procédé permet avantageusement de fabriquer un produit réfractaire fritté présentant une densité apparente comprise entre 3,1 et 4,5 g/cm$^3$, de préférence comprise entre 3,3 et 4,3 g/cm$^3$. Les modèles de compaction d'Andréasen ou de Fuller-Bolomey peuvent être utilisés pour modifier la densité apparente des produits réfractaires frittés. De tels modèles de compaction sont notamment décrits dans l'ouvrage intitulé « Traité de céramiques et matériaux minéraux », C.A. Jouenne, Editions Septima. Paris (1984), pages 403 à 405.

A l'étape A), des particules matricielles et des grains sont mélangés, de préférence avec un additif de mise en forme, pour former la charge de départ.

De préférence, les grains comportent des granules tels que décrits ci-dessus, de préférence consolidés thermiquement, de préférence frittés. Les granules peuvent ainsi avantageusement conserver leur forme sphérique lors de leur manipulation.

Le mélange particulaire peut être également livré prêt-à-l'emploi. Il suffit alors de le mélanger à de l'eau pour préparer la charge de départ.

La quantité d'eau est fonction du procédé utilisé à l'étape B).

Dans le cas d'une mise en forme par pressage à froid, un ajout d'une quantité d'eau comprise entre 1,5% et 4%, en pourcentage massique sur la base du mélange particulaire sans les additifs, est préféré. Dans le cas d'une mise en forme faisant intervenir une liaison hydraulique, comme par exemple un coulage, un ajout d'une quantité d'eau comprise entre 3 et 7%, en pourcentage massique sur la base du mélange particulaire sans les additifs, est préféré.

Sans pouvoir l'expliquer théoriquement, les inventeurs ont découvert que la forme sensiblement sphérique des granules améliore la résistance aux chocs thermiques, indépendamment de la porosité ouverte du granulat.

Les inventeurs ont également découvert que la porosité ouverte du granulat influence la coulabilité de la charge de départ. En effet, si la substitution de grains de chamotte par un granulat présentant une porosité ouverte supérieure à 10% conduit à une dégradation de la coulabilité, de manière inexpliquée, lorsque la porosité ouverte du granulat utilisé est inférieure à 6%, la coulabilité est supérieure à celle des produits classiques à grains de chamotte. La coulabilité est encore améliorée lorsque la porosité ouverte est inférieure à 2%.

A l'étape C), les conditions de frittage, et en particulier la température de frittage, dépendent de la composition du mélange particulaire. Habituellement, une température de frittage comprise entre 1400°C et 1700°C, de préférence comprise entre 1500°C et 1600°C est bien adaptée.

A l'issue de l'étape C), on obtient un produit réfractaire fritté.

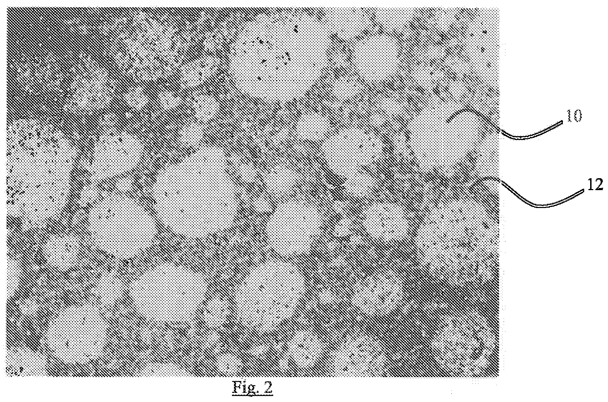

Un tel produit est représenté sur la figure 2. On distingue en particulier clairement les particules 10, sensiblement circulaires, et la matrice 12.

Le produit réfractaire fritté peut présenter une densité apparente supérieure à 3,00, supérieure à 3,10, supérieure à 3,30, supérieure à 3,50, et/ou inférieure à 4,30, ou inférieure à 4,20.

Il peut présenter une porosité ouverte supérieure à 10%, supérieure à 12%, supérieure à 14%, et/ou inférieure à 20%, inférieure à 18%, voire inférieure à 15%.

Les propriétés de ce produit le rendent particulièrement bien adapté à une utilisation dans un four de verrerie, un régénérateur, ou un canal de feeder.

Le produit fritté peut être utilisé sous la forme d'un bloc ou d'une couche, par exemple sous la forme d'un garnissage appliqué, par tout procédé connu, sur une paroi à protéger. Le frittage peut être effectué *in situ,* c'est-à-dire après que le produit a été disposé dans sa position de service.

**Exemples**

Pour fabriquer les grains « oxyde de chrome, alumine, silice, oxyde de titane » utilisés dans les produits des exemples 2, 3, 4, 6, 7, 8 et 9 mentionnés ci-dessous, les matières premières suivantes ont été utilisées :

- oxyde de chrome $Cr_2O_3$ pigmentaire d'une pureté supérieure à 95%, présentant une surface spécifique égale à 4m$^2$/g et une taille médiane de 0,7 $\mu$m ;

- alumine $Al_2O_3$ d'une pureté supérieure à 99%, présentant une surface spécifique égale à 7 $m^2/g$, et une taille médiane de 0,6μm ;
- fumée de silice, d'une pureté supérieure à 92% ;
- oxyde de titane, sous la forme rutile, d'une pureté supérieure à 93% et présentant une taille médiane de 1,5 μm.

Ces matières premières ont été dosées et mélangées de manière à présenter la composition chimique désirée.

Pour chaque exemple, 3000 g de mélange d'oxydes, 350 g d'eau et 150 g d'alcool polyvinylique (APV) sont introduits dans un malaxeur Eirich RV02.

L'ensemble est ensuite malaxé pendant 1 minute, avec un tourbillon tournant à 300 tr/min et une cuve réglée à 43 tr/min afin d'obtenir un mélange homogène. La vitesse de rotation du tourbillon est ensuite augmentée jusqu'à 1050 tr/min, et une quantité supplémentaire de 900 grammes du mélange d'oxydes est alors progressivement ajoutée en une minute. La rotation est maintenue 2 minutes après la fin de l'introduction de la quantité supplémentaire de charge. Les particules sont ensuite déchargées, séchées sous air 24h à 110°C avant d'être frittées à 1550°C pendant un temps de palier de 3 heures, sous air, avec une vitesse de montée en température et une vitesse de descente en température de 50°C/h. Après frittage, les particules sont tamisées et la tranche granulométrique 0,5 - 5 mm est conservée.

Les grains « oxyde de chrome, alumine, silice, oxyde de titane » utilisés dans le produit de l'exemple 10 ont été fabriqués par extrusion du même mélange que celui utilisé dans la fabrication des grains utilisés dans le produit de l'exemple 9, de manière à obtenir des pains extrudés. Ces pains extrudés ont ensuite été frittés sous air dans un cycle thermique présentant un palier de 3 heures à 1550°C, et enfin broyés et tamisés pour obtenir la tranche granulométrique 0,5 - 5 mm.

Des produits réfractaires frittés ont ensuite été fabriqués suivant des étapes A) à C) ci-dessus.

A l'étape A), la charge de départ a été préparée en mélangeant une quantité d'eau comprise entre 4,1% et 4,7% avec un mélange particulaire adapté à la composition chimique souhaitée. Les matières premières suivantes ont été utilisées :

- Grains « AZS » du produit réfractaire électrofondu ER-1681 fabriqué et commercialisé par la Société Européenne des Produits Réfractaires, et contenant en pourcentage en masse sur la base des oxydes : 32,5% de $ZrO_2$, 51% d'$Al_2O_3$, 15% de $SiO_2$ et 1,3% de $Na_2O$ (utilisés dans le produit de l'exemple 1), de taille maximale inférieure à 5 mm ;

- Grains « AZS-Cr » du produit réfractaire électrofondu ER-2161 fabriqué par la Société Européenne des Produits Réfractaires, et contenant en pourcentage en masse sur la base des oxydes : 27% de $Cr_2O_3$, 27% de $ZrO_2$, 28% d'$Al_2O_3$, 14,5% de $SiO_2$ et 1,1% de $Na_2O$ (utilisés dans le produit de l'exemple 5), de taille maximale inférieure à 5 mm ;

- Grains « fort chrome » contenant 92% de $Cr_2O_3$ et présentant une porosité ouverte inférieure à 3% (utilisés dans le produit de l'exemple 1*), de taille maximale inférieure à 5 mm ;

- Grains « fort chrome » contenant 98% de $Cr_2O_3$ et présentant une porosité ouverte inférieure à 3% (utilisés dans le produit de l'exemple 5*), de taille maximale inférieure à 5 mm ;

- Grains « oxyde de chrome, alumine, silice, oxyde de titane », de taille maximale inférieure à 5 mm, présentant en fonction des produits des exemples considérés, les caractéristiques figurant dans le tableau 1 suivant :

Tableau 1

|  | Grains « oxyde de chrome, alumine, silice, oxyde de titane » utilisés dans le produit de l'exemple : | | | | | | | |
|---|---|---|---|---|---|---|---|---|
|  | 2 | 3 | 4 | 6 | 7 | 8 | 9 | 10 |
| $Cr_2O_3$ (%) | 13,9 | 16,1 | 21,4 | 39,6 | 57,5 | 87,3 | 52 | 52,1 |
| $Al_2O_3$ (%) | 83,9 | 81,7 | 74,7 | 53,7 | 37,5 | 6,37 | 43,7 | 43,3 |
| $SiO_2$ (%) | 0,75 | 0,8 | 1,52 | 2,22 | 2,38 | 3,78 | 2,2 | 2,4 |
| $TiO_2$ (%) | 0,62 | 0,65 | 1,4 | 1,26 | 1,89 | 1,91 | 1,62 | 1,51 |
| Autres (%) | 0,83 | 0,75 | 0,98 | 0,38 | 0,73 | 0,64 | 0,48 | 0,69 |
| Porosité ouverte (%) | 4,02 | 3,58 | 5,08 | 1,56 | 0,9 | 0,6 | 1,02 | 1,47 |
| Granules | Oui | Oui | Oui | Oui | Oui | Oui | Oui | Non |

- De l'oxyde de chrome $Cr_2O_3$ pigmentaire d'une pureté supérieure à 95%, présentant une surface spécifique égale à 4 $m^2/g$ et une taille médiane de 0,7 μm ;

- De l'alumine $Al_2O_3$ d'une pureté supérieure à 99%, présentant une surface spécifique égale à 7 $m^2/g$, et une taille

médiane de 0,6$\mu$m ;

- De la zircone, d'une pureté supérieure à 98,5% présentant une taille médiane de 3 $\mu$m ;

- De l'oxyde de titane, sous la forme rutile, d'une pureté supérieure à 93% et présentant une taille médiane de 1,5 $\mu$m.

3% d'un additif de mise en forme (ciment alumineux CA25 commercialisé par ALMATYS) ont été ajoutés dans la charge de départ.

A l'étape B), la charge de départ a été mise en forme par une technique de vibrocoulage sous la forme d'une préforme aux dimensions adaptées à la mesure à effectuer.

A l'étape C), la préforme obtenue a ensuite été séchée puis frittée sous air à une température de 1550°C, pendant 10 heures.

Les mesures suivantes ont été réalisées :

La mesure de la **porosité ouverte** d'un ensemble de particules a été réalisée selon la méthode suivante :

- Sécher à 110°C pendant au moins 12 heures, 4 échantillons de 35 grammes constitués chacun de particules dont la taille est comprise entre 2 et 5 mm. La masse sèche de chacun des échantillons est notée $Ps_1$, $Ps_2$, $Ps_3$ et $Ps_4$. On note $Ps = Ps_1+Ps_2+Ps_3+Ps_4$.
- Placer chaque échantillon dans un flacon.
- A l'aide d'une pompe à vide, faire un vide d'au moins 0,07 MPa dans chacun des flacons et maintenir ce vide pendant 7 minutes. Puis introduire de l'eau dans le flacon de façon à recouvrir les particules d'au moins 2 cm d'eau, ce qui permet aux particules d'être toujours recouvertes d'eau lors des mises sous vide suivantes.
- Refaire un vide de 0,08 MPa dans chaque flacon contenant les particules et l'eau, et maintenir ce vide pendant 7 minutes. Casser le vide.
- Refaire un vide de 0,08 MPa dans chaque flacon, et maintenir ce vide pendant 7 minutes. Casser le vide.
- Refaire un vide de 0,08 MPa dans chaque flacon, et maintenir ce vide pendant 7 minutes. Casser le vide.
- Déterminer le poids immergé de chaque échantillon, $Pi_1$, $Pi_2$, $Pi_3$ et $Pi_4$. On note $Pi = Pi_1+Pi_2+Pi_3+Pi_4$.
- Verser ensuite le contenu des 4 flacons sur un tamis de maille carrées de 2 mm afin d'éliminer l'eau. Verser ensuite les particules sur un tissu de coton sec afin d'éliminer l'excès d'eau et essuyer les particules jusqu'à ce que le lustre d'humidité ait disparu de leur surface.
- Déterminer le poids humide Ph de l'ensemble des particules.

La porosité ouverte de l'ensemble de particules est égale à (Ph-Ps) /(Ph-Pi).

Ces mesures sont toujours effectuées sur des ensembles de particules frittées. Elles correspondent à des mesures moyennes sur le matériau constituant les particules, c'est-à-dire ne tiennent pas compte des interstices entre les différentes particules.

Les mesures de la **densité apparente** et de la **porosité ouverte** d'un produit fritté ont été réalisées sur des échantillons de dimensions 125 x 25 x 25 mm$^3$, selon la norme ISO 5017.

Les **circularités $Ci_{50}$ et $Ci_{10}$ et les convexités $Co_{50}$ et $Co_{10}$** d'un ensemble de particules peuvent être évaluées par la méthode suivante :

Un échantillon de particules présentant des tailles comprises entre 0,5 et 2 mm est versé sur la plaque de verre prévue à cet effet d'un appareil Morphologi® G3 commercialisé par la société Malvern. Le grossissement choisi est de 1x. L'analyse est lancée. Afin d'éviter la comptabilisation des éventuelles rayures de la plaque de verre et des poussières, les mesures correspondant à des particules présentant une 1 argeur (« width ») inférieure à 0,4 mm sont éliminées du comptage par création d'un filtre (« width < 400 »). Le nombre de particules comptabilisées après filtrage est supérieur à 250.

L'appareil fournit une évaluation de la distribution des circularités (« Circularity ») et des convexités (« Convexity »), les particules étant comptabilisées en nombre.

Il est également possible d'estimer la distribution des circularités et des convexités des particules présentes dans un produit fritté par une analyse de clichés d'une coupe dudit produit, comme représenté sur la figure 2.

Les **analyses chimiques** ont été réalisées par fluorescence X en ce qui concerne les constituants dont la teneur est supérieure à 0,5%. La teneur des constituants présents en une teneur inférieure à 0,5% a été déterminée par AES-ICP (« Atomic Emission Spectoscopy-Inductively Coupled Plasma » en anglais).

Pour mesurer la vitesse moyenne de corrosion et l'indice de rugosité, des échantillons sous la forme de barreaux cylindriques présentant un rayon initial $r_o$ égal à 11 mm et de 100 mm de hauteur ont été prélevés et soumis à un test consistant à faire tourner les échantillons immergés dans un bain de verre en fusion, porté à une température T déterminée en fonction de la composition dudit verre. La vitesse de rotation des échantillons était de 6 tours par minute. Les échantillons ont été maintenus immergés pendant une durée « t ». A la fin de cette période et après refroidissement, la partie d'un échantillon qui a trempé dans le verre (de hauteur H égale à 30 mm) présente une section sous la forme d'une ellipse de petit axe Pa et de grand axe Ga. Pour chaque échantillon, on détermine la valeur minimale de Pa (Pam) en mm, la valeur maximale de Pa (PaM) en mm, la valeur minimale de Ga (Gam) en mm et la valeur maximale de Ga (GaM) en mm. On fixe $Pa_{moyen}$ = (Pam+PaM)/2 et $Ga_{moyen}$=(Gam+GaM)/2. Pour chaque échantillon, le volume restant moyen $Vr_{moyen}$ est déterminé par la formule $Vr_{moyen}$=($\pi$ . H . $Pa_{moyen}$ . $Ga_{moyen}$)/4. Pour chaque échantillon, le volume corrodé moyen $Vc_{moyen}$ est déterminé par la formule $Vc_{moyen}$=[($\pi$ . H . 22)/4] - $Vr_{moyen}$, Pour chaque échantillon, la vitesse moyenne de corrosion Vu, exprimée en $\mu$m/h, est déterminée par la formule :

$$Vu = \frac{r_0 - \sqrt{r_0^2 - \left(\dfrac{Vc_{moyen}}{\pi H}\right)}}{t}$$

**La vitesse moyenne de corrosion** «Vu» d'un échantillon donne une évaluation de la résistance à la corrosion de l'échantillon testé. Ainsi, plus la vitesse de corrosion d'un échantillon sera faible, plus sa résistance à la corrosion par le verre en fusion sera élevée.

**L'indice de rugosité** Ir de l'échantillon i, $Ir_i$, est déterminé par la formule suivante :

$$Ir_i = [100.(Vc_{moyen} \text{ échantillon référence})/( Vc_{moyen} \text{ échantillon référence} - \Delta V \text{ échantillon i})]-100,$$

dans laquelle $\Delta V$=$Vc_{moyen}$ - VcM).

L'essai normalisé PRE III,26/PRE/R,5,1/78 a été utilisé pour évaluer **la résistance aux chocs thermiques** par mesure de la perte relative de résistance à la flexion (% Perte MOR) après un ou plusieurs cycles thermiques. Chaque cycle thermique consiste à chauffer l'éprouvette d'essai de la température ambiante jusqu'à une température T de 800°C, à la maintenir à cette température T pendant 30 minutes, puis à la plonger dans de l'eau froide. Les éprouvettes sont des barreaux de 125 x 25 x 25 $mm^3$ ne comportant aucune face de peau.

La **résistance à la flexion** a été mesurée suivant la norme ISO 5014. Pour une composition donnée, la mesure de la résistance à la flexion initiale des éprouvettes (encore non soumises à un choc thermique), ou « MOR initial », est la valeur moyenne mesurée sur 3 éprouvettes identiques. La mesure de la résistance après choc thermique à 800°C, ou « MOR après CT », est la valeur moyenne de la résistance à la flexion mesurée à température ambiante sur les 3 éprouvettes après qu'elles ont subi ledit choc thermique. La mesure de la perte relative de résistance à la flexion, ou «% Perte MOR », est donnée par la formule suivante :

$$\% \text{ Perte MOR} = 100.(\text{MOR après CT} - \text{MOR initial}) / (\text{MOR initial})$$

Les caractéristiques des mélanges particulaires testés et les résultats aux tests figurent dans le tableau 2 suivant :

Tableau 2

| Exemple | | | 1* | 2 | 3 | 4 | 5* | 6 | 7 | 8 | 9 | 10 |
|---|---|---|---|---|---|---|---|---|---|---|---|---|
| **Mélange particulaire** | | | | | | | | | | | | |
| % $Cr_T$ | | | 33,1 | 20,1 | 25,4 | 31 | 61,8 | 43,7 | 62 | 80,5 | 61,2 | 61,4 |
| Matrice | | | $Cr_2O_3$ | $Cr_2O_3$ | $Cr_2O_3$ | $Cr_2O_3$ | $Cr_2O_3$ | $Cr_2O_3$ | $Cr_2O_3$ | $Cr_2O_3$ | $Cr_2O_3$ | $Cr_2O_3$ |
| | | | $Al_2O_3$ | $Al_2O_3$ | $Al_2O_3$ | $Al_2O_3$ | $Al_2O_3$ | $Al_2O_3$ | $Al_2O_3$ | $Al_2O_3$ | $Al_2O_4$ | $Al_2O_5$ |
| | | | Ciment | Ciment | Ciment | Ciment | Ciment | Ciment | Ciment | Ciment | Ciment | Ciment |
| | Composition | | - | - | - | - | - | - | $ZrO_2$ | $TiO_2$ | - | - |
| | Quantité de matrice (%) | | 31 | 24 | 24 | 28 | 35 | 32 | 37 | 32 | 35 | 35 |
| | % $Cr_M$ | | 50 | 40,6 | 53,4 | 55,7 | 67 | 55,6 | 68,8 | 64 | 72 | 72 |
| | Conditions respectées | | (I), (V) et (VI) | (I), (V) et (VI) | (I), (V) et (VI) | (I), (V) et (VI) | (I), (V) et (VI) | (I), (V) et (VI) | (I), (V) et (VI) | (I), (V) et (VI) | (I) | (I) |
| | Diamètre médian ($\mu$m) | | 2,7 | 3,2 | 2,8 | 2,6 | 1,9 | 2,5 | 2,2 | 2,2 | 2 | 2 |

(suite)

| Exemple | | 1* | | 2 | 3 | 4 | 5* | | 6 | 7 | 8 | 9 | | 10 | |
|---|---|---|---|---|---|---|---|---|---|---|---|---|---|---|---|
| **Mélange particulaire** | | | | | | | | | | | | | | | |
| Grains | Quantité de grains | 69 | | 76 | 76 | 72 | 65 | | 68 | 63 | 68 | 65 | | 65 | |
| | Composition | AZS | fort chrome | Oxyde de chrome, alumine, silice, oxyde de titane | | | AZS-Cr | fort chrome | Oxyde de chrome, alumine, silice, oxyde de titane | | | Oxyde de chrome, alumine, silice, oxyde de titane | | | |
| | % $Cr_G$ | 0 | 92 | 13,5 | 16 | 20 | 27 | 98 | 40 | 58 | 88 | 52,1 | 88 | 52 | 88 |
| | Conditions respectées | Aucune | | (II), (III), (IV), (VII) et (VIII) | (II), (III), (IV), (VII) et (VIII) | (II), (III), (IV), (VII) et (VIII) | (II) | | (II), (III), (IV), (VII) et (VIII) | (II), (III), (IV), (VII) et (VIII) | (II), (III), (IV), (VII) et (VIII) | (II), (III), (IV) et (VII) | | (II),(III),(IV) et (VII) | |
| | % de grains respectant lesdites conditions | - | | (II) : 100% (III) : 100% (IV) : 0% (VII) : 100% (VIII) : 100% | (II) : 100% (III) : 100% (IV) : 0% (VII) : 100% (VIII) : 100% | (II) : 100% (III) : 100% (IV) : 0% (VII) : 100% (VIII) : 100% | (II) : 100% | | (II) : 100% (III) : 100% (IV) : 0% (VII) : 100% (VIII) : 100% | (II) : 100% (III) : 100% (IV) : 0% (VII) : 100% (VIII) : 100% | (II) : 100% (III) : 100% (IV) : 0% (VII) : 100% (VIII) : 100% | (II) : 100 (III) : 91% (IV) : 0% (VII) : 91% | | (II) : 100 (III) : 91% (IV) : 0% (VII) : 91% | |
| | Diamètre médian (mm) | 1,6 | | 1,7 | 1,7 | 1,6 | 1,6 | | 1,7 | 2 | 1,7 | 1,7 | | 1,7 | |
| **Pièce frittée obtenue après frittage du mélange particulaire** | | | | | | | | | | | | | | | |
| % $Cr_2O_3$ | | 33,1 | | 20,1 | 25,4 | 31,0 | 61,8 | | 43,7 | 62,0 | 80,5 | 61,2 | | 61,4 | |
| % $Al_2O_3$ | | 38,5 | | 77,3 | 72 | 65,3 | 16,5 | | 52,9 | 29,6 | 5,76 | 33,18 | | 33,13 | |
| % $ZrO_2$ | | 17,4 | | 0,05 | 0,05 | 0,07 | 11,8 | | 0,1 | 4,43 | 7,81 | 1,31 | | 1,25 | |
| % $SiO_2$ | | 8,78 | | 0,71 | 0,78 | 1,30 | 7,10 | | 0,85 | 1,28 | 2,59 | 1,36 | | 1,29 | |
| % $TiO_2$ | | 0,46 | | 0,48 | 0,53 | 1,04 | 0,70 | | 1 | 1,38 | 2,08 | 1,21 | | 1,3 | |
| % CaO | | 0,95 | | 0,59 | 0,59 | 0,61 | 0,90 | | 0,91 | 0,93 | 0,93 | 0,83 | | 0,79 | |

(suite)

| Pièce frittée obtenue après frittage du mélange particulaire | | | | | | | | | | | |
|---|---|---|---|---|---|---|---|---|---|---|---|
| % Autres éléments | | 0,81 | 0,77 | 0,65 | 0,68 | 1,2 | 0,54 | 0,38 | 0,33 | 0,91 | 0,84 |
| Densité apparente (g/cm$^3$) | | 3,30 | 3,30 | 3,38 | 3,51 | 3,65 | 3,60 | 3,81 | 4,10 | 3,66 | 3,73 |
| Porosité ouverte (%) | | 16 | 16,3 | 14,7 | 14 | 14,5 | 15,8 | 15,5 | 14,7 | 14,9 | 15 |
| Verre C, T=1450°C, t=100 h | Vitesse moyenne de corrosion Vu, en $\mu$m/h | 27,7 | 28,2 | 24,8 | 20,1 | - | - | - | - | - | - |
| | Indice de rugosité Ir | 25 | 5 | 4 | 3 | - | - | - | - | - | - |
| Verre C, T=1450°C, t=120 h | Vitesse moyenne de corrosion Vu, en $\mu$m/h | - | - | - | - | 8,4 | 7,5 | 6 | - | 6 | 7 |
| | Indice de rugosité Ir | - | - | - | - | 20 | 6 | 3 | - | 3 | 4 |
| Verre C, T=1480°C, t=100 h | Vitesse moyenne de corrosion Vu, en $\mu$m/h | - | - | - | - | 10,1 | - | - | 7,2 | - | - |
| | Indice de rugosité Ir | - | - | - | - | 18 | - | - | 7 | - | - |
| % Perte MOR avant/après chocs thermiques à 800°C (%) | | - | - | - | - | - | - | - | - | 45 | 65 |
| * : Hors invention | | | | | | | | | | | |

Un indice de rugosité inférieur à 15 est représentatif d'une usure régulière et uniforme.

Une comparaison des produits des exemples 1* et 4 montre que pour des teneurs totales en oxyde de chrome similaires, le produit selon l'exemple 4 présente, après essai de corrosion, un indice de rugosité plus de trois fois inférieur à celui de l'exemple 1* ainsi qu'une résistance à la corrosion remarquable. Une comparaison des produits des exemples 5* d'une part et 7 et 9 et 10 d'autre part conduit à une conclusion similaire, l'exemple 7 comportant cependant de la zircone. Une comparaison des produits des exemples 1* d'une part et 2 et 3 d'autre part montre que les produits selon les exemples 2 et 3 présentent un indice de rugosité très inférieur à celui du produit de l'exemple 1*. En outre, malgré une teneur en chrome inférieure, les produits selon les exemples 2 et 3 présentent une résistance à la corrosion par le verre en fusion similaire ou supérieure à celle de l'exemple 1*.

Le même constat peut être réalisé en comparant les produits des exemples 6 et 5*.

Une comparaison du produit de l'exemple 5* avec le produit de l'exemple 8 montre que ce dernier, qui comporte de l'oxyde de titane, présente un indice de rugosité beaucoup plus faible.

Enfin, une comparaison des produits des exemples 9 et 10 montre que le produit de l'exemple 9, comportant 91% de granules, sur la base de la masse des grains, présente une résistance aux chocs thermiques supérieure à celle de l'exemple 10 qui ne comporte sensiblement pas de granules, à vitesse moyenne de corrosion et indice de rugosité sensiblement équivalents. Comme cela apparaît clairement à présent, l'invention fournit un mélange particulaire permettant de fabriquer des produits réfractaires particulièrement bien adaptés pour être en contact avec du verre en fusion. A l'usage, ces produits s'usent de manière remarquablement uniforme, ce qui conduit à augmenter considérablement leur durée de vie.

Bien entendu, l'invention n'est pas limitée aux exemples fournis à des fins illustratives.


**Revendications**

1. Dispositif choisi parmi un four de verrerie et un canal de distribution du verre comportant un bloc et/ou un revêtement en un produit fritté obtenu par frittage d'un mélange particulaire constitué d'une fraction matricielle et d'un granulat constitués respectivement des particules présentant une taille inférieure ou égale à 50 $\mu$m, dites « particules matricielles » et des particules présentant une taille supérieure à 50 $\mu$m, dites « grains », la fraction matricielle représentant plus de 10% et moins de 45% de la masse du mélange particulaire,

   ledit mélange particulaire présentant une teneur en $Cr_2O_3 + Al_2O_3$ supérieure à 60%, en pourcentage massique sur la base des oxydes, et comportant une teneur en oxyde de chrome, notée « $Cr_T$ », comprise entre 10% et 82%, de préférence comprise entre 10 et 80%, en pourcentage massique sur la base des oxydes du mélange réfractaire, la fraction matricielle dudit mélange particulaire étant telle que

$$0,39.(Cr_T)+24 < Cr_M < 0,39.(Cr_T)+52 \qquad \textbf{(I)},$$

   - $Cr_M$ désignant la teneur massique en oxyde de chrome de la fraction matricielle, en pourcentage en masse sur la base des oxydes de la matrice, et

   le granulat étant tel que $x_{II} \geq 97\%$, $x_{III} \geq 70\%$, et $x_{IV} \leq x_{III}$ - 70%

   - $Cr_G$ désignant la teneur massique en oxyde de chrome d'un grain, en pourcentage en masse sur la base des oxydes de ce grain,

   - $x_{II}$ désignant la quantité, en pourcentage massique sur la base du granulat, de grains respectant la condition suivante **(II)** :

   – si $10\% \leq Cr_T \leq 30\%$, alors $Cr_G \leq 0,018.(Cr_T)^2 - 0,390.(Cr_T)+58,8$ ;

   – si $30\% < Cr_T \leq 60\%$, alors $Cr_G \leq 1,22.(Cr_T) + 26,7$ ;    **(II)**

   – si $60\% < Cr_T \leq 82\%$, en particulier si $Cr_T \leq 80\%$, alors $Cr_G \leq 100$,

   - $x_{III}$ désignant la quantité, en pourcentage massique sur la base du granulat, de grains respectant la condition suivante **(III)** :

– si $10\% \leq Cr_T \leq 30\%$, alors

$0,018.(Cr_T)^2-0,390.(Cr_T)+9,10 \leq Cr_G \leq 0,018.(Cr_T)^2-0,390.(Cr_T)+25,10$ ;

– si $30\% < Cr_T \leq 60\%$, alors $1,17.(Cr_T)-21,5 \leq Cr_G \leq 1,17.(Cr_T)-5,5$ ;　　　**(III)**

– si $60\% < Cr_T \leq 82\%$, en particulier si $Cr_T \leq 80\%$, alors $1,17.(Cr_T)-21,5 \leq Cr_G$

$\leq 1,67.(Cr_T)-35,5$,

- $x_{IV}$ désignant la quantité, en pourcentage massique sur la base du granulat, de grains respectant la condition suivante **(IV)** :

– Si $10\% \leq Cr_T \leq 30\%$, alors $0,018.(Cr_T)^2-0,390.(Cr_T)+9,10 > Cr_G$ ;

– Si $30\% < Cr_T \leq 60\%$, alors $1,17.(Cr_T)-21,5 > Cr_G$ ;　　　**(IV)**

– Si $60\% < Cr_T \leq 82\%$, en particulier si $Cr_T \leq 80\%$, alors $1,17.(Cr_T)-21,5 > Cr_G$.

**2.** Dispositif selon la revendication précédente, les grains contenant de l'oxyde de chrome dudit mélange particulaire étant des particules frittées.

**3.** Dispositif selon l'une quelconque des revendications précédentes, le granulat dudit mélange particulaire présentant une circularité médiane supérieure à 0,87.

**4.** Dispositif selon la revendication précédente, ledit mélange particulaire étant tel que $x_{II} \geq 99\%$.

**5.** Dispositif selon l'une quelconque des revendications précédentes, ledit mélange particulaire étant tel que

$$0,39.(Cr_T)+29 < Cr_M < 0,39.(Cr_T)+47 \qquad \textbf{(V)}$$

**6.** Dispositif selon l'une quelconque des revendications précédentes, au moins 70% en masse des grains dudit mélange particulaire présentant, en pourcentage en masse sur la base des oxydes, une teneur en oxyde de chrome respectant la condition suivante **(VII)** :

- Si $10\% \leq Cr_T \leq 30\%$, alors $0,018.(Cr_T)^2-0,390.(Cr_T)+13,10 \leq Cr_G \leq 0,018.(Cr_T)^2-0,390.(Cr_T)+21,10$ ;
- Si $30\% < Cr_T \leq 60\%$, alors $1,17.(Cr_T)-17,5 \leq Cr_G \leq 1,17.(Cr_T)-9,5$ ;
- Si $60\% < Cr_T \leq 82\%$, en particulier si $Cr_T \leq 80\%$, alors $1,67.(Cr_T)-51,5 \leq Cr_G \leq 1,67.(Cr_T)-39,5$.

**7.** Dispositif selon l'une quelconque des revendications précédentes, au moins 90% en masse des grains dudit mélange particulaire présentant une teneur en oxyde de chrome « $Cr_G$ » respectant la condition **(III)**

- Si $10\% \leq Cr_T \leq 30\%$, alors $0,018.(Cr_T)^2-0,390.(Cr_T)+9,10 \leq Cr_G \leq 0,018.(Cr_T)^2-0,390.(Cr_T)+25,10$ ;
- Si $30\% < Cr_T \leq 60\%$, alors $1,17.(Cr_T)-21,5 \leq Cr_G \leq 1,17.(Cr_T)-5,5$ ;
- Si $60\% < Cr_T \leq 82\%$, en particulier si $Cr_T \leq 80\%$, alors $1,17.(Cr_T)-21,5 \leq Cr_G \leq 1,67.(Cr_T)-35,5$ ;
et/ou la condition **(VII)**
- Si $10\% \leq Cr_T \leq 30\%$, alors $0,018.(Cr_T)^2-0,390.(Cr_T)+13,10 \leq Cr_G \leq 0,018.(Cr_T)^2-0,390.(Cr_T)+21,10$ ;
- Si $30\% < Cr_T \leq 60\%$, alors $1,17.(Cr_T)-17,5 \leq Cr_G \leq 1,17.(Cr_T)-9,5$ ;
- Si $60\% < Cr_T \leq 82\%$, en particulier si $Cr_T \leq 80\%$, alors $1,67.(Cr_T)-51,5 \leq Cr_G \leq 1,67.(Cr_T)-39,5$.

**8.** Dispositif selon l'une quelconque des revendications précédentes, ledit mélange particulaire étant tel que, quel que soit le constituant considéré, pourvu que sa teneur soit supérieure à 1% en pourcentage massique sur la base des oxydes, l'écart type de la distribution de sa teneur entre les différents grains dudit mélange particulaire est inférieur à 8.

**9.** Dispositif selon l'une quelconque des revendications précédentes, ledit mélange particulaire présentant une teneur en $Cr_2O_3 + Al_2O_3$ supérieure à 80%, en pourcentage massique sur la base des oxydes.

**10.** Dispositif selon l'une quelconque des revendications précédentes, au moins 70% en masse des grains dudit mélange particulaire présentant, en pourcentages en masse sur la base des oxydes, une teneur en oxyde de chrome respectant la condition suivante (VII) :

- Si 10% $\leq$ Cr$_T$ $\leq$ 30%, alors 0,018.(Cr$_T$)$^2$-0,390.(Cr$_T$)+13,10 $\leq$ Cr$_G$ $\leq$ 0,018.(Cr$_T$)$^2$-0,390.(Cr$_T$)+21,10 ;
- Si 30% < Cr$_T$ $\leq$ 60%, alors 1,17.(Cr$_T$)-17,5 $\leq$ Cr$_G$ $\leq$ 1,17.(Cr$_T$)-9,5 ;
- Si 60% < Cr$_T$ $\leq$ 82%, en particulier si Cr$_T$ $\leq$ 80%, alors 1,67.(Cr$_T$)-51,5 $\leq$ Cr$_G$ $\leq$ 1,67.(Cr$_T$)-39,5.

**11.** Dispositif selon l'une quelconque des revendications précédentes,

- la fraction matricielle dudit mélange particulaire étant constituée de particules composées d'oxyde de chrome et/ou d'alumine et/ou de zircone et/ou de magnésie et/ou d'oxyde de fer et/ou d'oxyde de titane et/ou de silice et/ou d'oxyde de calcium, ou est constituée d'un mélange de telles particules ; et/ou
- le granulat formé par les grains dudit mélange particulaire étant constitué de particules composées d'oxyde de chrome et/ou d'alumine et/ou de zircone et/ou de magnésie et/ou d'oxyde de fer et/ou d'oxyde de titane et/ou de silice, ou est constitué d'un mélange de telles particules.

**12.** Dispositif selon l'une quelconque des revendications précédentes, au moins 80% en masse des grains dudit mélange particulaire présentant une composition chimique telle que, en pourcentages massiques sur la base des oxydes et pour un total de 100% :

- Cr$_2$O$_3$ + Al$_2$O$_3$ + ZrO$_2$ + MgO + Fe$_2$O$_3$ + SiO$_2$ + TiO$_2$ $\geq$ 90%,
- Cr$_2$O$_3$ + Al$_2$O$_3$ + MgO $\geq$ 60%, et
- Cr$_2$O$_3$ $\geq$ 9%, et
- 20% $\geq$ SiO$_2$ $\geq$ 0,1%, et
- autres oxydes : $\leq$ 10%.

**13.** Dispositif selon l'une quelconque des revendications précédentes, la fraction matricielle dudit mélange particulaire étant constituée de particules d'oxyde de chrome d'une part et, d'autre part, de particules d'alumine et/ou de particules de zircone et/ou de particule de magnésie et/ou de particules d'oxyde de fer et/ou de particules d'oxyde de titane et/ou de particules de silice et/ou de particules d'oxyde de calcium, ou étant constituée de particules composées d'oxyde de chrome d'une part, et d'autre part, d'alumine et/ou de zircone et/ou de magnésie et/ou d'oxyde de fer et/ou d'oxyde de titane et/ou de silice et/ou de calcium, ou de mélanges de telles particules.

**14.** Dispositif selon l'une quelconque des revendications précédentes, le granulat dudit mélange particulaire présentant une densité apparente supérieure à 85% de la densité théorique et/ou une porosité ouverte inférieure à 3%.

**15.** Dispositif selon l'une quelconque des revendications précédentes, ledit mélange particulaire étant tel que Cr$_T$ $\leq$ 80%.

**Patentansprüche**

**1.** Vorrichtung ausgewählt aus einem Glasofen und einem Glas-Verteilerkanal enthaltend einen Block und/oder eine Verkleidung aus einem gesinterten Produkt erhalten durch Sintern einer Teilchen-Mischung gebildet aus einer Matrix-Fraktion und einem Granulat gebildet jeweils aus Teilchen, welche eine Größe von geringer als oder gleich 50 $\mu$m aufweisen, genannt "Matrixteilchen" und aus Teilchen, welche eine Größe von größer als 50 $\mu$m aufweisen, genannt "Körner", wobei die Matrix-Fraktion mehr als 10 % und weniger als 45 % der Masse der Teilchen-Mischung darstellt,
wobei die besagte Teilchen-Mischung einen Gehalt an Cr$_2$O$_3$ + Al$_2$O$_3$ von größer als 60 % aufweist, in Massen-Prozentangabe auf Basis der Oxide, und einen Gehalt an Chromoxid enthält, notiert "Cr$_T$", zwischen 10 % und 82 %, vorzugsweise zwischen 10 und 80 %, in Massen-Prozentangabe auf Basis der Oxide der feuerfesten Mischung, wobei die Matrix-Fraktion der besagten Teilchen-Mischung so ist, dass

$$0{,}39.(\mathrm{Cr_T}) + 24 < \mathrm{Cr_M} < 0{,}39.(\mathrm{Cr_T}) + 52 \qquad\qquad \text{(I)},$$

- wobei Cr$_M$ den Massen-Gehalt an Chromoxid der Matrix-Fraktion bezeichnet, in Prozentangabe in Masse auf Basis der Oxide der Matrix, und

wobei das Granulat so ist, dass $x_{II} \geq 97\ \%$, $x_{III} \geq 70\ \%$, und $x_{IV} \leq x_{III}$ - 70 %

- wobei $Cr_G$ den Massen-Gehalt an Chromoxid eines Korns bezeichnet, in Prozentangabe in Masse auf Basis der Oxide dieses Korns,

- wobei $x_{II}$ die Menge bezeichnet, in Massen-Prozentangabe auf Basis des Granulats, von Körnern, welche die folgende Bedingung (**II**) einhalten:

- wenn $10\ \% \leq Cr_T \leq 30\ \%$, dann $Cr_G \leq 0{,}018.(Cr_T)^2 - 0{,}390.(Cr_T) + 58{,}8$;

- wenn $30\ \% < Cr_T \leq 60\ \%$, dann $Cr_G \leq 1{,}22.(Cr_T) + 26{,}7$; **(II)**

- wenn $60\ \% < Cr_T \leq 82\ \%$, insbesondere wenn $Cr_T \leq 80\ \%$, dann $Cr_G \leq 100$,

- wobei $x_{III}$ die Menge bezeichnet, in Massen-Prozentangabe auf Basis des Granulats, von Körnern, welche die folgende Bedingung (**III**) einhalten:

- wenn $10\ \% \leq CrT \leq 30\ \%$, dann

$$0{,}018.(Cr_T)^2 - 0{,}390.(Cr_T) + 9{,}10 \leq Cr_G \leq 0{,}018.(Cr_T)^2 - 0{,}390.(Cr_T) + 25{,}10\ ;$$

- wenn $30\ \% < Cr_T \leq 60\ \%$, dann $1{,}17.(Cr_T) - 21.5 \leq Cr_G \leq 1{,}17.(Cr_T) - 5{,}5\ ;$ **(III)**

- wenn $60\ \% < Cr_T \leq 82\ \%$, insbesondere wenn $Cr_T \leq 80\ \%$, dann $1{,}17.(Cr_T) - 21.5 \leq$

$Cr_G \leq 1{,}67.(Cr_T) - 35{,}5$,

- wobei $x_{IV}$ die Menge bezeichnet, in Massen-Prozentangabe auf Basis des Granulats, von Körnern, welche die folgende Bedingung (**IV**) einhalten:

- wenn $10\ \% \leq Cr_T \leq 30\ \%$, dann $0{,}018.(Cr_T)^2 - 0{,}390.(Cr_T) + 9{,}10 > Cr_G$;

- wenn $30\ \% < Cr_T \leq 60\ \%$, dann $1{,}17.(Cr_T) - 21.5 > Cr_G$; **(IV)**

- wenn $60\ \% < Cr_T \leq 82\ \%$, insbesondere wenn $Cr_T \leq 80\ \%$, dann $1{,}17.(Cr_T) - 21.5 >$

$Cr_G$.

2. Vorrichtung nach dem vorhergehenden Anspruch, wobei die Körner, welche das Chromoxid der besagten Teilchen-Mischung enthalten, gesinterte Teilchen sind.

3. Vorrichtung nach irgendeinem der vorhergehenden Ansprüche, wobei das Granulat der besagten Teilchen-Mischung eine mittlere Rundheit von größer als 0,87 aufweist.

4. Vorrichtung nach dem vorhergehenden Anspruch, wobei die besagte Teilchen-Mischung so ist, dass $x_{II} \geq 99\ \%$.

5. Vorrichtung nach irgendeinem der vorhergehenden Ansprüche, wobei die besagte Teilchen-Mischung so ist, dass

$$0{,}39.(Cr_T) + 29 < Cr_M < 0{,}39.(Cr_T) + 47 \qquad \textbf{(V)}$$

6. Vorrichtung nach irgendeinem der vorhergehenden Ansprüche, wobei mindestens 70 % in Masse der Körner der besagten Teilchen-Mischung, in Massen-Prozentangabe auf Basis der Oxide, einen Gehalt an Chromoxid aufweisen, welcher die folgende Bedingung **(VII)** einhält:

- wenn $10\ \% \leq CrT \leq 30\ \%$, dann $0{,}018.(Cr_T)^2 - 0{,}390.(Cr_T) + 13{,}10 \leq Cr_G \leq 0{,}018.(Cr_T)^2 - 0{,}390.(Cr_T) + 21{,}10$;
- wenn $30\ \% < Cr_T \leq 60\ \%$, dann $1{,}17.(Cr_T) - 17.5 \leq Cr_G \leq 1{,}17.(Cr_T) - 9{,}5$;
- wenn $60\ \% < Cr_T \leq 82\ \%$, insbesondere wenn $Cr_T \leq 80\ \%$, dann $1{,}67.(Cr_T) - 51.5 \leq Cr_G \leq 1{,}67.(Cr_T) - 39{,}5$.

7. Vorrichtung nach irgendeinem der vorhergehenden Ansprüche, wobei mindestens 90 % in Masse der Körner der

EP 2 603 465 B1

besagten Teilchen-Mischung einen Gehalt an Chromoxid "$Cr_G$" aufweisen, welcher die Bedingung (**III**) einhält

- wenn 10 % ≤ CrT ≤ 30 %, dann $0,018.(Cr_T)^2 - 0,390.(Cr_T) + 9,10 < Cr_G \le 0,018.(Cr_T)^2 - 0,390.(Cr_T) + 25,10$ ;
- wenn 30 % < $Cr_T$ ≤ 60 %, dann $1,17.(Cr_T) - 21.5 \le Cr_G \le 1,17.(Cr_T) - 5,5$ ;
- wenn 60 % < $Cr_T$ ≤ 82 %, insbesondere wenn $Cr_T$ ≤ 80 %, dann $1,17.(Cr_T) - 21.5 \le Cr_G \le 1,67.(Cr_T) - 35,5$;
  und/oder die Bedingung (**VII**)
- wenn 10 % ≤ CrT ≤ 30 %, dann $0,018.(Cr_T)^2 - 0,390.(Cr_T) + 13,10 \le Cr_G \le 0,018.(Cr_T)^2 - 0,390.(Cr_T) + 21,10$;
- wenn 30 % < $Cr_T$ ≤ 60 %, dann $1,17.(Cr_T) - 17.5 \le Cr_G \le 1,17.(Cr_T) - 9,5$;
- wenn 60 % < $Cr_T$ ≤ 82 %, insbesondere wenn $Cr_T$ ≤ 80 %, dann $1,67.(Cr_T) - 51.5 \le Cr_G \le 1,67.(Cr_T) - 39,5$.

8. Vorrichtung nach irgendeinem der vorhergehenden Ansprüche, wobei die besagte Teilchen-Mischung so ist, dass, welcher auch immer der betrachtete Bestandteil, sofern sein Gehalt größer ist als 1 % in Massen-Prozentangabe auf Basis der Oxide, die Standardabweichung der Verteilung seines Gehaltes zwischen den verschiedenen Körnern der besagten Teilchen-Mischung geringer als 8 ist.

9. Vorrichtung nach irgendeinem der vorhergehenden Ansprüche, wobei die besagte Teilchen-Mischung einen Gehalt an $Cr_2O_3$ + $Al_2O_3$ von größer als 80 % aufweist, in Massen-Prozentangabe auf Basis der Oxide.

10. Vorrichtung nach irgendeinem der vorhergehenden Ansprüche, wobei mindestens 70 % in Masse der Körner der besagten Teilchen-Mischung, in Massen-Prozentangaben auf Basis der Oxide, einen Gehalt an Chromoxid aufweisen, welcher die folgende Bedingung (VII) einhält:

- wenn 10 % ≤ CrT ≤ 30 %, dann $0,018.(Cr_T)^2 - 0,390.(Cr_T) + 13,10 \le Cr_G \le 0,018.(Cr_T)^2 - 0,390.(Cr_T) + 21,10$ ;
- wenn 30 % < $Cr_T$ ≤ 60 %, dann $1,17.(Cr_T) - 17.5 \le Cr_G \le 1,17.(Cr_T) - 9,5$ ;
- wenn 60 % < $Cr_T$ ≤ 82 %, insbesondere wenn $Cr_T$ ≤ 80 %, dann $1,67.(Cr_T) - 51.5 \le Cr_G \le 1,67.(Cr_T) - 39,5$.

11. Vorrichtung nach irgendeinem der vorhergehenden Ansprüche,

- wobei die Matrix-Fraktion der besagten Teilchen-Mischung gebildet ist aus Teilchen, welche zusammengesetzt sind aus Chromoxid und/oder aus Aluminiumoxid und/oder aus Zirkoniumoxid und/oder aus Magnesiumoxid und/oder aus Eisenoxid und/oder aus Titanoxid und/oder aus Siliziumoxid und/oder aus Calciumoxid, oder gebildet ist aus einer Mischung solcher Teilchen; und/oder
- wobei das Granulat, welches ausgebildet ist aus den Körnern der besagten Teilchen-Mischung, gebildet ist aus Teilchen, welche zusammengesetzt sind aus Chromoxid und/oder aus Aluminiumoxid und/oder aus Zirkoniumoxid und/oder aus Magnesiumoxid und/oder aus Eisenoxid und/oder aus Titanoxid und/oder aus Siliziumoxid, oder gebildet ist aus einer Mischung solcher Teilchen.

12. Vorrichtung nach irgendeinem der vorhergehenden Ansprüche, wobei mindestens 80 % in Masse der Körner der besagten Teilchen-Mischung eine chemische Zusammensetzung aufweisen, so dass, in Massen-Prozentangaben auf Basis der Oxide und für eine Summe von 100 %:

- $Cr_2O_3$ + $Al_2O_3$ + $ZrO_2$ + $MgO$ + $Fe_2O_3$ + $SiO_2$ + $TiO_2$ ≥ 90 %,
- $Cr_2O_3$ + $Al_2O_3$ + $MgO$ ≥ 60 %, und
- $Cr_2O_3$ ≥ 9 %, und
- 20 % ≥ $SiO_2$ ≥ 0,1 %, und
- andere Oxide: ≤ 10 %.

13. Vorrichtung nach irgendeinem der vorhergehenden Ansprüche, wobei die Matrix-Fraktion der besagten Teilchen-Mischung gebildet ist aus Teilchen aus Chromoxid einerseits, und, andererseits, aus Teilchen aus Aluminiumoxid und/oder aus Teilchen aus Zirkoniumoxid und/oder aus Teilchen aus Magnesiumoxid und/oder aus Teilchen aus Eisenoxid und/oder aus Teilchen aus Titanoxid und/oder aus Teilchen aus Siliziumoxid und/oder aus Teilchen aus Calciumoxid, oder gebildet ist aus Teilchen, welche zusammengesetzt sind aus Chromoxid einerseits, und, andererseits, aus Aluminiumoxid und/oder aus Zirkoniumoxid und/oder aus Magnesiumoxid und/oder aus Eisenoxid und/oder aus Titanoxid und/oder aus Siliziumoxid und/oder aus Calcium, oder aus Mischungen solcher Teilchen.

14. Vorrichtung nach irgendeinem der vorhergehenden Ansprüche, wobei das Granulat der besagten Teilchen-Mischung eine Schüttdichte von größer als 85 % der theoretischen Dichte und/oder eine offene Porosität von geringer als 3 % aufweist.

**15.** Vorrichtung nach irgendeinem der vorhergehenden Ansprüche, wobei die Teilchen-Mischung so ist, dass $Cr_T \leq 80\%$.

**Claims**

**1.** A device selected from a glass furnace and a glass distribution channel comprising a block and/or a lining of a sintered product obtained by sintering a particulate mixture consisting of a matrix fraction and a granulate constituted respectively of particles having a size less than or equal to 50 $\mu$m, so-called "matrix particles" and particles having a size greater than 50 $\mu$m, so-called "grains", the matrix fraction representing more than 10% and less than 45% of the weight of the particulate mixture,

said particulate mixture having a content of $Cr_2O_3$ + $Al_2O_3$ greater than 60%, in percentage by weight based on the oxides, and having a chromium oxide content, designated "$Cr_T$", between 10% and 82%, preferably between 10 and 80%, in percentage by weight based on the oxides of the refractory mixture,

the matrix fraction of said particulate mixture being such that

$$0.39.(Cr_T)+24 < Cr_M < 0.39.(Cr_T)+52 \qquad \textbf{(I),}$$

- $Cr_M$ denoting the content by weight of chromium oxide in the matrix fraction, in percentage by weight based on the oxides of the matrix, and

the granulate being such that $x_{II} \geq 97\%$, $x_{III} \geq 70\%$, and $x_{IV} \leq x_{III}$ - 70%

- $Cr_G$ denoting the content by weight of chromium oxide in a grain, in percentage by weight based on the oxides of said grain,

- $x_{II}$ denoting the amount, in percentage by weight based on the granulate, of grains meeting the following condition (**II**):

- if $10\% \leq Cr_T \leq 30\%$, then $Cr_G \leq 0.018.(Cr_T)^2 - 0.390.(Cr_T)+58.8$;

- if $30\% < Cr_T \leq 60\%$, then $Cr_G \leq 1.22.(Cr_T) + 26.7$;     **(II)**

- if $60\% < Cr_T \leq 82\%$, in particular if $Cr_T \leq 80\%$, then $Cr_G \leq 100$,

- $x_{III}$ denoting the amount, in percentage by weight based on the granulate, of grains meeting the following condition (**III**):

- if $10\% \leq Cr_T \leq 30\%$, then

$0.018.(Cr_T)^2-0.390.(Cr_T)+9.10 \leq Cr_G \leq 0.018.(Cr_T)^2-0.390.(Cr_T)+25.10$;

- if $30\% < Cr_T \leq 60\%$, then $1.17.(Cr_T)-21.5 \leq Cr_G \leq 1.17.(Cr_T)-5.5$; **(III)**

- if $60\% < Cr_T \leq 82\%$, in particular if $Cr_T \leq 80\%$, then $1.17.(Cr_T)-21.5 \leq Cr_G \leq 1.67.(Cr_T)-35.5$,

- $x_{IV}$ denoting the amount, in percentage by weight based on the granulate, of grains meeting the following condition (**IV**):

- If $10\% \leq Cr_T \leq 30\%$, then $0.018.(Cr_T)^2-0.390.(Cr_T)+9.10 > Cr_G$;

- If $30\% < Cr_T \leq 60\%$, then $1.17.(Cr_T)-21.5 > Cr_G$;     **(IV)**

- If $60\% < Cr_T \leq 82\%$, in particular if $Cr_T \leq 80\%$, then $1.17.(Cr_T)-21.5 > Cr_G$.

**2.** The device as claimed in the preceding claim, the grains containing chromium oxide of said particulate mixture being sintered particles.

**3.** The device as claimed in any one of the preceding claims, the granulate of said particulate mixture having a median circularity greater than 0.87.

4. The device as claimed in the preceding claim, said particulate mixture being such that $x_{II} \geq 99\%$.

5. The device as claimed in any one of the preceding claims, said particulate mixture being such that

$$0.39.(Cr_T)+29 < Cr_M < 0.39.(Cr_T)+47 \qquad \textbf{(V)}$$

6. The device as claimed in any one of the preceding claims, at least 70 % by weight of the grains of said particulate mixture having, in percentage by weight based on the oxides, a chromium oxide content meeting the following condition **(VII):**

   - If $10\% \leq Cr_T \leq 30\%$, then $0.018.(Cr_T)^2-0.390.(Cr_T)+13.10 \leq Cr_G \leq 0.018.(Cr_T)^2-0.390.(Cr_T)+21.10$;
   - If $30\% < Cr_T \leq 60\%$, then $1.17.(Cr_T)-17.5 \leq Cr_G \leq 1.17.(Cr_T)-9.5$;
   - If $60\% < Cr_T \leq 82\%$, in particular if $Cr_T \leq 80\%$, then $1.67.(Cr_T)-51.5 \leq Cr_G \leq 1.67.(Cr_T)-39.5$.

7. The device as claimed in any one of the preceding claims, at least 90 % by weight of the grains of said particulate mixture having a content of chromium oxide "$Cr_G$" meeting condition (**III**)

   - If $10\% \leq Cr_T \leq 30\%$, then $0.018.(Cr_T)^2-0.390.(Cr_T)+9.10 \leq Cr_G \leq 0.018.(Cr_T)^2-0.390.(Cr_T)+25.10$;
   - If $30\% < Cr_T \leq 60\%$, then $1.17.(Cr_T)-21.5 \leq Cr_G \leq 1.17.(Cr_T)-5.5$;
   - If $60\% < Cr_T \leq 82\%$, in particular if $Cr_T \leq 80\%$, then $1.17.(Cr_T)-21.5 \leq Cr_G \leq 1.67.(Cr_T)-35.5$;
   and/or condition **(VII)**
   - If $10\% \leq Cr_T \leq 30\%$, then $0.018.(Cr_T)^2-0.390.(Cr_T)+13.10 \leq Cr_G \leq 0.018.(Cr_T)^2-0.390.(Cr_T)+21.10$;
   - If $30\% < Cr_T \leq 60\%$, then $1.17.(Cr_T)-17.5 \leq Cr_G \leq 1.17.(Cr_T)-9.5$;
   - If $60\% < Cr_T \leq 82\%$, in particular if $Cr_T \leq 80\%$, then $1.67.(Cr_T)-51.5 \leq Cr_G \leq 1.67.(Cr_T)-39.5$.

8. The device as claimed in any one of the preceding claims, said particulate mixture being such that, whatever constituent is considered, provided that its content is greater than 1% in percentage by weight based on the oxides, the standard deviation of the distribution of its content among the various grains of said particulate mixture is less than 8.

9. The device as claimed in any one of the preceding claims, said particulate mixture having a content of $Cr_2O_3$ + $Al_2O_3$ greater than 80%, in percentage by weight based on the oxides.

10. The device as claimed in any one of the preceding claims, at least 70 % by weight of the grains of said particulate mixture having, in percentages by weight based on the oxides, a chromium oxide content meeting the following condition (VII):

   - If $10\% \leq Cr_T \leq 30\%$, then $0.018.(Cr_T)^2-0.390.(Cr_T)+13.10 \leq Cr_G \leq 0.018.(Cr_T)^2-0.390.(Cr_T)+21.10$;
   - If $30\% < Cr_T \leq 60\%$, then $1.17.(Cr_T)-17.5 \leq Cr_G \leq 1.17.(Cr_T)-9.5$;
   - If $60\% < Cr_T \leq 82\%$, in particular if $Cr_T \leq 80\%$, then $1.67.(Cr_T)-51.5 \leq Cr_G \leq 1.67.(Cr_T)-39.5$.

11. The device as claimed in any one of the preceding claims,

   - the matrix fraction of said particulate mixture consisting of particles composed of chromium oxide and/or alumina and/or zirconia and/or magnesia and/or iron oxide and/or titanium oxide and/or silica and/or calcium oxide, or consisting of a mixture of such particles; and/or
   - the granulate formed by the grains of said particulate mixture consisting of particles composed of chromium oxide and/or alumina and/or zirconia and/or magnesia and/or iron oxide and/or titanium oxide and/or silica, or consisting of a mixture of such particles.

12. The device as claimed in any one of the preceding claims, at least 80 % by weight of the grains of said particulate mixture having a chemical composition such that, in percentages by weight based on the oxides and for a total of 100%:

   - $Cr_2O_3$ + $Al_2O_3$ + $ZrO_2$ + MgO + $Fe_2O_3$ + $SiO_2$ + $TiO_2 \geq 90\%$,

- $Cr_2O_3 + Al_2O_3 + MgO \geq 60\%$, and
- $Cr_2O_3 \geq 9\%$, and
- $20\% \geq SiO_2 \geq 0.1\%$, and
- other oxides: $\leq 10\%$.

13. The device as claimed in any one of the preceding claims, the matrix fraction of said particulate mixture consisting of particles of chromium oxide on the one hand and, on the other hand, of particles of alumina and/or of particles of zirconia and/or of particles of magnesia and/or of particles of iron oxide and/or of particles of titanium oxide and/or of particles of silica and/or of particles of calcium oxide, or consisting of particles composed of chromium oxide on the one hand, and on the other hand, of alumina and/or of zirconia and/or of magnesia and/or of iron oxide and/or of titanium oxide and/or of silica and/or of calcium, or mixtures of such particles.

14. The device as claimed in any one of the preceding claims, the granulate of said particulate mixture having an apparent density greater than 85% of the theoretical density and/or an open pore volume below 3%.

15. The device as claimed in any one of the preceding claims, said particulate mixture being such that $Cr_T \leq 80\%$.

Fig. 1a

Fig. 1b

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6352951 B
- US 4823359 A
- US 4158569 A

**Littérature non-brevet citée dans la description**

- **M. JAUPAIN.** Symposium on Refractory materials for glass-melting furnaces. laboratoire de recherche de Pilkington Brothers, Ltd, 1964
- Traité de céramiques et matériaux minéraux. C.A. Jouenne. 1984, 403-405